# EUROPEAN PATENT APPLICATION

(11) **EP 1 206 105 A1**
(43) Date of publication of application: **15.05.2002**
(21) Application number: 01930137.3
(22) Date of filing: 15.05.2001
(51) Int. Cl.: H04M 3/42, H04M 3/53, H04M 11/10

(54) **VOICE STORAGE SYSTEM, EXCHANGER AND VOICE STORAGE APPARATUS**

(30) Priority: 15.05.2000 JP 2000141494; 29.06.2000 JP 2000196662
(71) Applicant: MATSUSHITA ELECTRIC INDUSTRIAL CO., LTD, Kadoma-shi, Osaka 571-0000 (JP)
(72) Inventor: MORITA, Junichi, Hachioji-shi, Tokyo 193-0823 (JP); URANAKA, Hiroshi, Bunkyo-ku, Tokyo 113-0021 (JP); TAKAGI, Kenji, Yokohama-shi, Kanagawa 232-0066 (JP); OGASAWARA, Noritoshi, Katsushika-ku, Tokyo 124-0012 (JP); KAWAGUCHI, Sachiko, Suginami-ku, Tokyo 166-0016 (JP)
(74) Representative: Casalonga, Axel
(86) International application number: JP0104020
(87) International publication number: WO0189182

(57) **Abstract**

There is disclosed a voice storage apparatus which carries out synchronization processing of voice and an external message based on a synchronization signal such as a time stamp and performs stop of recording unnecessary voice data and smooth change of reproduced voice in an environment using a network such as a LAN in which fluctuation in an arrival time of voice or data. A voice storage apparatus 103 includes means for acquiring time stamps from voice and an external message and establishing synchronization between voice and event information in the external message, means for imparting time stamps to the voice and a control message and means for storing/reproducing a few bytes at a top part of the whole voice which can be a next reproduction candidate, and an exchange 102 includes means for imparting time stamps to the voice and the control message, means for acquiring time stamps from the voice and the external message transmitted from the voice storage apparatus and establishing synchronization between the voice and the external message, and means for storing in the exchange several bytes at a top part of the whole voice which can be a next reproduction candidate.

## Description

### TECHNICAL FIELD

The present invention relates to a voice storage system for storing voice through a network such as a LAN in which fluctuation in an arrival time of voice data or control data is large.

### BACKGROUND ART

In recent years, with development of a computer network as typified by spread of the Internet and increase in transmission speed, use of a mode for transmitting on a computer network stream type data such as voice conventionally transmitted by a circuit switched network, namely, Voice Over IP (which will be referred to as VoIP hereinafter) becomes active. Further, a voice log system for storing all of speech communication voice in a personal computer or the like and saving them as data by utilizing this VoIP technique or a system such as IVR (interactive voice response) for reproducing the stored voice and holding a dialogue with a person who has made a call, presenting some alternatives in this dialogue and narrowing down a destination of a call based on a choice of that person has come into practical use.

Such a voice storage system includes an exchange connected with a telephone through a telephone net and a voice storage apparatus (for example, a personal computer) connected to this exchange through a LAN. The voice of the telephone is stored in the voice storage apparatus, and the voice stored in the voice storage apparatus is reproduced and transmitted to the telephone through the exchange and the telephone network.

In the VolP, Ethernet is often used as a protocol of a data link layer and a physical layer. Since Ethernet is a best effort type protocol sharing the band, it has a drawback that loss of the voice data or fluctuation in the data arrival interval is large when the data traffic is high. Therefore, in the voice storage system using this computer network, there is a problem that, when the voice data and the control data for controlling storage/reproduction of the voice are transmitted/received in parallel, storage or reproduction of the voice is hard to be controlled while synchronizing these two types of data.

As a prior art invention for solving synchronization of the voice and the data, there is known the invention disclosed in Japanese Patent Application Laid-open No. 9045/1996. According to this invention, an exchange-based voice mail apparatus and a LAN-based multimedia mail system are integrated, and the voice and graphic information or any other data can be read in a created sequence in synchronization.

The prior art invention, however, places emphasis on synchronization with the voice information and the data read from the mail box, but does not control the voice data itself.

In the voice storage system using the computer network, the voice data must be synchronized with the control data in order to control stopping or restart of recording of unnecessary voice data. Alternatively, when there is a request for changing the reproduced voice from a telephone during reproduction of the voice, it is necessary to rapidly cope with this request. In the prior art system, however, such control is not taken into consideration.

### DISCLOSURE OF INVENTION

In view of the above-described problem, it is an object of the present invention to provide, in a voice storage system through a network such as a LAN in which fluctuation in an arrival time interval of voice data or control data is large, a system for accurately controlling stop of recording unnecessary voice data or smooth changing processing when a change of reproduced voice is requested.

Thus, according to the present invention, there is provided a voice storage system comprising: a circuit switched network for performing communication by circuit switching; a first telephone which is connected to the circuit switched network and performs voice communication; an exchange which is connected to the circuit switched network and performs voice switching; one or a plurality of private telephones which are connected to the exchange and perform voice communication; and a voice storage apparatus which is connected to the exchange and stores at least voice when recording voice communication by voice data and an external message transmitted from the exchange, wherein the voice storage apparatus controls storage of voice in speech communication by synchronizing voice data with an external message transmitted from the exchange.

When a request for changing reproduced voice is issued from the telephone, the exchange changes the reproduced voice by synchronizing the voice data with the external data.

Further, to the exchange are provided a reproduced voice buffer for temporarily storing the reproduced voice to be transmitted to the circuit switched network and buffer clearing means for clearing unnecessary voice from the reproduced voice buffer based on a clearing request transmitted from the voice storage apparatus for changing the reproduced voice.

Furthermore, the voice storage apparatus is configured to transmit a part of the top of the whole voice which can be a candidate for next reproduction during transmission of voice data, and the exchange is configured to store a part of the top of the whole voice which can be a candidate for next reproduction simultaneously with reproduction of the voice, reproduce a part of the stored voice when changing the reproduced voice and subsequently reproduce the voice transmitted from the voice storage apparatus after changing the reproduced voice.

It is, therefore, possible to eliminate unnecessary voice in hold/transfer processing during recording speech communication.

Moreover, when a reproduced voice change request is issued by an event from a telephone during reproduction of the voice, the smooth voice change processing can be carried out by clearing the voice before change which remains in the reproduced voice buffer.

In addition, when a reproduced voice change request is issued by an event from the telephone during reproduction of the voice, it is possible to shorten a time lag till the voice after change is stored in the reproduced voice buffer by partially reproducing the changed voice from a part of the top of the whole voice which has been prepared in advance and can be a next candidate for reproduction.

### BRIEF DESCRIPTION OF DRAWINGS

FIG. 1 is a block diagram showing a structure of a first embodiment of a voice storage system according to the present invention;
FIG. 2 is a block diagram showing a structure of an exchange in the first embodiment according to the present invention;
FIG. 3 is a block diagram showing a structure of a voice storage apparatus in the first embodiment according to the present invention;
FIG. 4 is a sequence diagram showing a connection operation of telephones in the first embodiment according to the present invention;
FIG. 5 is a flowchart showing a flow of processing of the voice storage apparatus in the first embodiment according to the present invention;
FIG. 6 is a format diagram showing a control message data structure from the exchange to the voice storage apparatus in the first embodiment according to the present invention;
FIG. 7 is a format diagram showing a voice data structure from the exchange to the voice storage apparatus in the first embodiment according to the present invention;
FIG. 8 is a block diagram showing a structure of an exchange in a second embodiment according to the present invention;
FIG. 9 is a block diagram showing a structure of a voice storage apparatus in the second embodiment according to the present invention;
FIG. 10 is a sequence diagram showing a connection operation of telephones in the second embodiment according to the present invention;
FIG. 11 is a flowchart showing a flow of processing of the voice storage apparatus in the second embodiment according to the present invention;
FIG. 12 is a format diagram showing a control message data structure from the voice storage apparatus to the exchange in the second embodiment according to the present invention;
FIG. 13 is a format diagram showing a voice data structure from the voice storage apparatus to the exchange in the second embodiment according to the present invention;
FIG. 14 is a format diagram showing a control message data structure from a voice storage apparatus to an exchange in the second embodiment and a third embodiment according to the present invention;
FIG. 15 is a block diagram showing a structure of the exchange in the third embodiment according to the present invention;
FIG. 16 is a block diagrams showing a structure of the voice storage apparatus in the third embodiment according to the present invention;
FIG. 17 is a sequence diagram showing a connection operation of telephones in the third embodiment according to the present invention;
FIG. 18 is a flowchart showing a flow of processing of the voice storage apparatus in the third embodiment according to the present invention;
FIG. 19 is a format diagram showing a reproduction candidate data structure from the voice storage apparatus to the exchange in the third embodiment according to the present invention;
FIG. 20 is a format diagram showing a control message data structure from the voice storage apparatus to the exchange in the third embodiment according to the present invention;
FIG. 21 is a format diagram showing a voice data structure from the voice storage apparatus to the exchange in the third embodiment according to the present invention;
FIG. 22 is a block diagram showing reproduction candidate selection information in the third embodiment according to the present invention;
FIG. 23 is a block diagram showing an effect in the third embodiment according to the present invention;
FIG. 24 is a block diagram showing a structure of an exchange in a fourth embodiment according to the present invention;
FIG. 25 is a block diagram showing a structure of a voice storage apparatus in the fourth embodiment according to the present invention;
FIG. 26 is a sequence diagram showing a connection operation of telephones in the fourth embodiment according to the present invention;
FIG. 27 is a flowchart showing a flow of processing of the voice storage apparatus in the fourth embodiment according to the present invention;
FIG. 28 is a format diagram showing a control message data structure from the voice storage apparatus to the exchange in the fourth embodiment according to the present invention;
FIG. 29 is a format diagram showing a voice data structure from the voice storage apparatus to the exchange in the fourth embodiment according to the present invention;
FIG. 30 is a format diagram showing a control message data structure from a voice storage apparatus to an exchange in the fourth embodiment and a fifth embodiment according to the present invention;
FIG. 31 is a block diagram showing a structure of the exchange in the fifth embodiment according to the present invention;
FIG. 32 is a block diagram showing a structure of the voice storage apparatus in the fifth embodiment according to the present invention;
FIG. 33 is a sequence diagram showing a connection operation of telephones in the fifth embodiment according to the present invention;
FIG. 34 is a flowchart showing a flow of processing in the voice storage apparatus in the fifth embodiment according to the present invention;
FIG. 35 is a format diagram showing a reproduction candidate data structure from the voice storage apparatus to the exchange in the fifth embodiment according to the present invention;
FIG. 36 is a format diagram showing a control message data structure from the voice storage apparatus to the exchange in the fifth embodiment according to the present invention; and
FIG. 37 is a format diagram showing a voice data structure from the voice storage apparatus to the exchange in the fifth embodiment according to the present invention.

### MODE FOR CARRYING OUT THE INVENTION

Embodiments according to the present invention will now be described hereinafter with reference to the accompanying drawings. It is to be noted that the present invention is not restricted to these embodiments and can be carried out in various modes without departing from its scope.

### (First Embodiment)

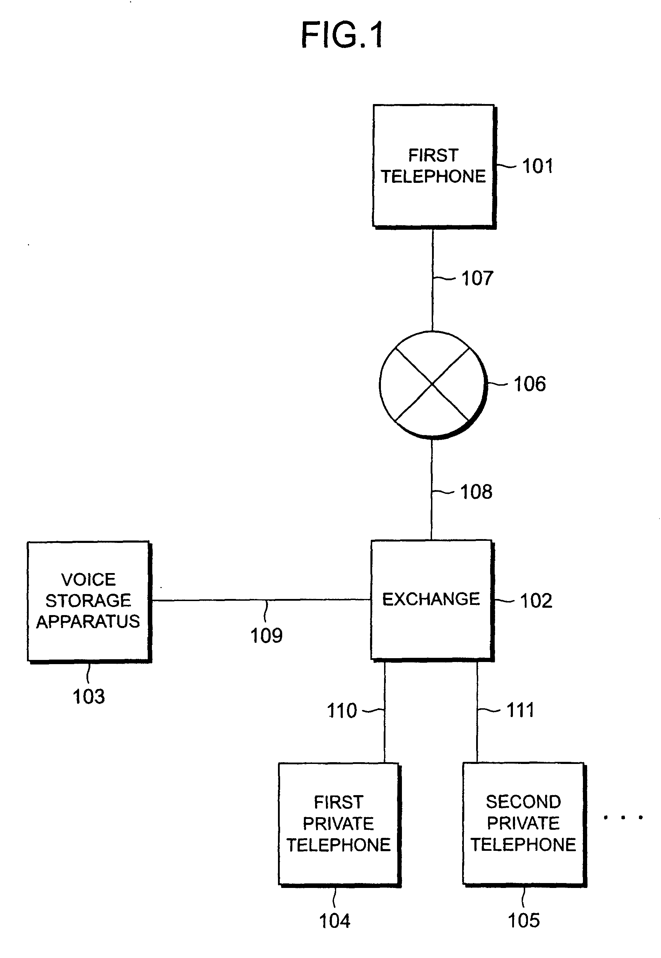

As shown in FIG. 1, the first embodiment of a voice storage system according to the present invention includes: a first telephone 101 capable of performing communication by at least circuit switching (which will be referred to as circuit switched communication hereinafter); an exchange 102 for performing circuit switched communication with the first telephone through a circuit switched network 106; a voice storage apparatus 103 which is connected to the exchange 102 by a communication path 109 and carries out voice storage; and a first private telephone 104 and a second private telephone 105 connected to the exchange 102. Communication on the communication path 109 is conducted by the TCP/IP protocol. It is to be noted that the basic structure of second to fifth embodiments is the same as that shown in FIG. 1.

The first telephone 101 and the circuit switched network 106 are connected to each other by a communication path 107 such as a dedicated line, ISDN, or an analog line, and the circuit switched network 106 and the exchange 102 are also connected to each other by the similar communication path 108.

The exchange 102 imparts a time stamp indicative of a current time to voice data acquired by circuit switched communication, generates an external message serving as control data to the voice storage apparatus 103, imparts a time stamp to the created message, and transmits the voice data and the external message to the voice storage apparatus 103 through a communication path 109. The communication path 109 is constituted by, for example, Ethernet, and can perform communication of the voice data by a voice channel and communication of the external message by a control channel.

The voice storage apparatus 103 receives the external message and the voice data from the exchange 102, and carries out control and storage of voice based on the time stamp of each of the external message and the voice data.

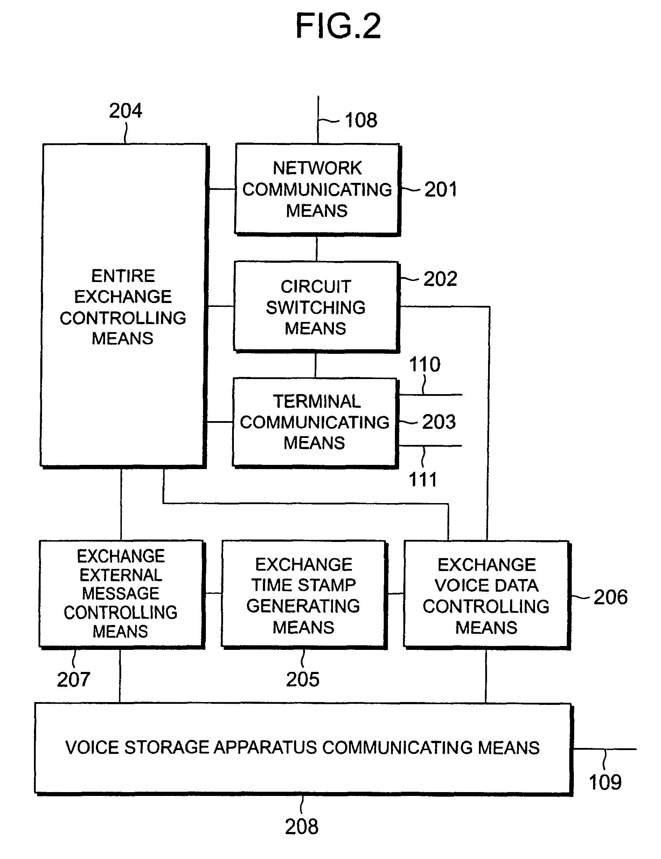

The detailed structure of the exchange 102 in the first embodiment will now be described with reference to FIG. 2. The exchange 102 includes: a network communicating means 201 for effecting connection with the circuit switched network 106; circuit switching means 202 for performing line connecting between the networks or the terminals; terminal communicating means 203 for establishing connection between the exchange 102 and the first private telephone 104 and the second private telephone 105; entire exchange controlling means 204 for controlling the entire exchange 102; exchange time stamp generating means 205 for generating a time stamp; exchange voice data controlling means 206 for acquiring a time stamp from the exchange time stamp generating means 205, imparting the time stamp to the voice data acquired from the circuit switching means 202 and generating the voice data; exchange external message controlling means 207 for acquiring a time stamp from the exchange time stamp generating means 205, imparting the time stamp to an event acquired from the entire exchange controlling means 204 and generating an external message; and voice storage apparatus communicating means 28 for performing communication with the voice storage apparatus 103.

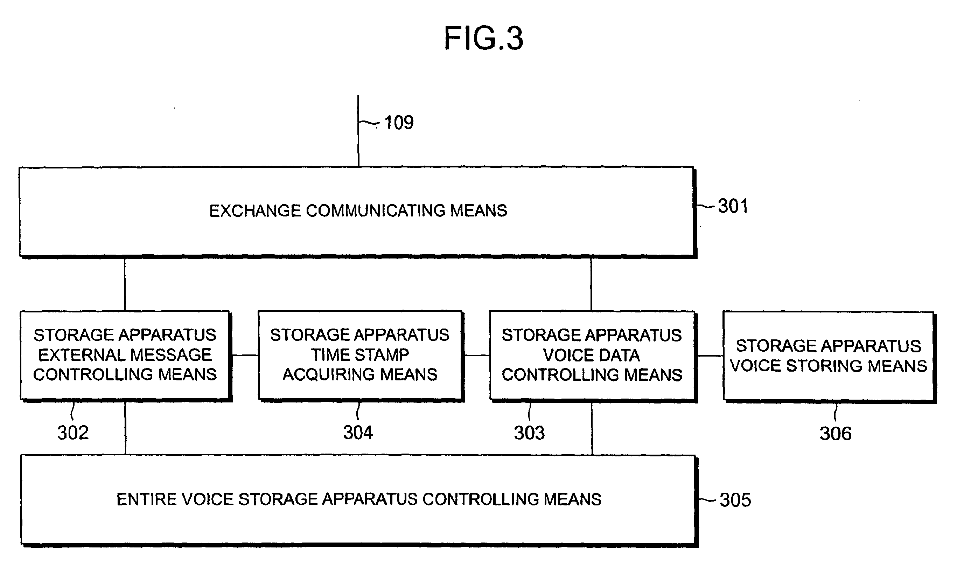

The detailed structure of the voice storage apparatus 103 in the first embodiment will now be described with reference to Fig. 3. The voice storage apparatus 103 includes: exchange communicating means 301 for performing communication with the exchange 102; storage apparatus external message controlling means 302 for performing control such as fetching of an external message received by the exchange communicating means 301; storage apparatus voice data controlling means 303 for effecting control of voice data received by the exchange communicating means 301; storage apparatus time stamp acquiring means 304 for acquiring time stamps from the external message and the voice data; entire voice storage apparatus controlling means 305 for controlling the entire voice storage apparatus 103; and storage apparatus voice storing means 306 which is controlled by the entire voice storage apparatus controlling means 305 and stores speech communication voice based on the time stamps of the external message and the voice data.

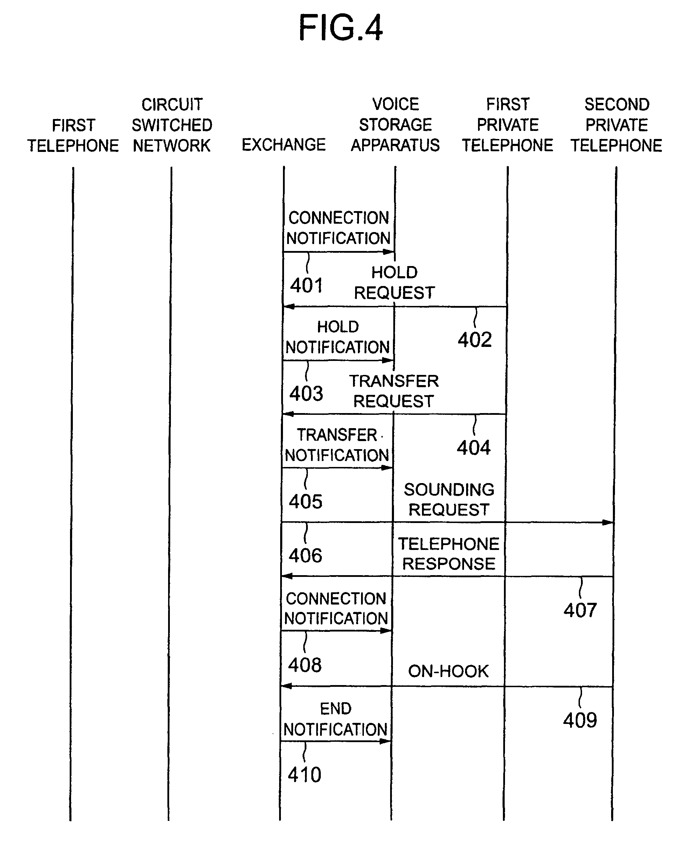

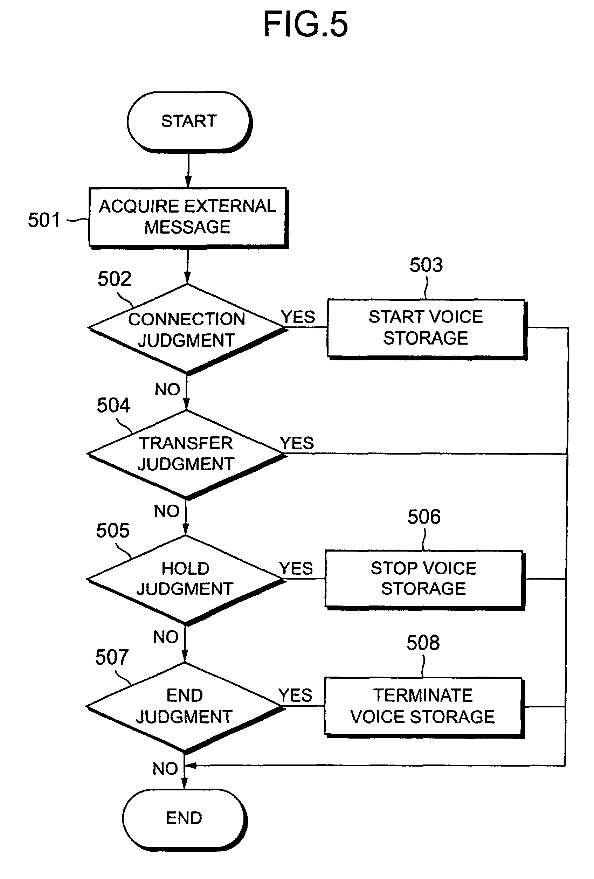

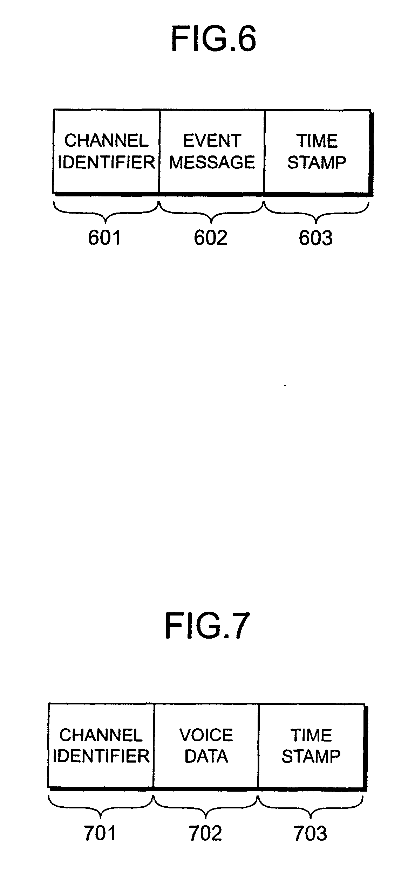

The operation of the voice storage system having the above-described structure will now be described with reference to FIGS. 4 to 7. FIG. 4 is a sequence diagram showing a connection operation of telephones of the voice storage system. FIG. 5 is a flowchart of a voice storage operation on the voice storage apparatus. FIG. 6 shows a data structure of external message information transmitted from the exchange 102 to the voice storage apparatus 103 by a control channel on the communication path 109. In FIG. 6, reference numeral 601 denotes a channel identifier field for identifying a call during the service. Reference numeral 602 designates an event message field for storing event information acquired by the exchange 102. Reference numeral 603 represents a time stamp field indicating a time at which an external message is transmitted. FIG. 7 shows a data structure of voice data information transmitted from the exchange 102 to the voice storage apparatus 103 by the voice channel on the communication path 109. In FIG. 7, reference numeral 701 denotes a channel identifier field for identifying a call during the service. Reference numeral 702 designates a voice data field for storing actual data of voice in the speech communication. Reference numeral 703 represents a time stamp field indicating a time at which voice data is transmitted.

In FIG. 4, description will be given as to a sequential flow, namely, voice storage is started by commencing the speech communication between the first telephone 101 and the first private telephone 104; voice storage is stopped by a hold request by the first private telephone 104; voice storage is restarted by starting the speech communication between the first telephone 101 and the second private telephone 105 through a transfer request to the second private telephone 105; and voice storage is terminated by end of the speech communication between the first telephone 101 and the second private telephone 105.

When the speech communication between the first telephone 101 and the first private telephone 104 is started, the exchange 102 transmits a connection notification 401 to the voice storage apparatus 103. Connection notification transmission processing will now be described in detail.

The connection notification 401 is created by the exchange external message controlling means 207. The exchange external message controlling means 207 generates the connection notification 401 in the form of an external message based on an event message indicative of a channel identifier and the connection notification acquired by the entire exchange controlling means 204 and a time stamp which is obtained by the exchange time stamp generating means 205 and indicates a transmission time, and the voice storage apparatus communicating means 208 transmits the connection notification 401 by the control channel on the communication path 109.

At the same time, the exchange voice data controlling means 206 creates voice data based on the channel identifier acquired by the entire exchange controlling means 204, the speech communication voice acquired by the circuit switching means 202 and the time stamp which is obtained by the exchange time stamp generating means 205 and indicates a transmission time, and the voice storage apparatus communicating means 208 transmits the created voice data by the voice channel on the communication path 109.

The voice storage apparatus 103 starts voice storage upon receiving the connection notification 401. Judgment on start of voice storage in the voice storage apparatus 103 is carried out by the flow of the voice storage start processing 503 through the external message/voice acquisition processing 501 and the connection judgment 502 as shown in FIG. 5. The voice storage start processing will now be described in detail.

The voice storage apparatus 103 acquires the external message from the control channel on the communication path 109 and the voice data from the voice channel on the communication path 109 by the exchange communication means 301. The storage apparatus external message controlling means 302 which has fetched the external message obtains the time stamp from the external message by using the storage apparatus time stamp acquiring means 304, and outputs it to the entire voice storage apparatus controlling means 305. On the other hand, the storage apparatus voice data controlling means 303 which has fetched the voice data obtains the time stamp imparted to the voice data by using the storage apparatus time stamp acquiring means 304, and outputs it to the entire voice storage apparatus controlling means 305. The entire voice storage apparatus controlling means 305 establishes synchronization based on each time stamp and causes the storage apparatus voice storing means 306 to output the voice data having the time stamp following the time stamp of the external message to the storage apparatus voice data controlling means 303, and the storage apparatus voice storing means 306 starts voice storage.

Subsequently, when the first private telephone 104 performs the hold operation, a hold request 402 is transmitted to the exchange 102. The exchange 102 obtains the hold request 402 and transmits a hold notification 403 to the voice storage apparatus 103. Transmission of the hold notification 403 is performed by the procedure similar to that of transmission of the connection notification 401.

Upon receiving the hold notification 403, the voice storage apparatus 103 stops voice storage. Judgment on stop of voice storage in the voice storage apparatus 103 is effected by a flow of the voice storage stop processing 506 through the external message/voice acquisition processing 501 and the hold judgment 505. The voice storage stop processing is carried out by the procedure similar to that of the voice storage start processing.

When the first private telephone 104 performs the transfer operation, a transfer request 404 is transmitted to the exchange 102. The exchange 102 obtains the transfer request 404 and transmits a transfer notification 405 to the voice storage apparatus 103. Transmission of the transfer notification 405 is carried out by the procedure similar to that of transmission of the connection notification 401.

The voice storage apparatus 103 receives the transfer notification 405 and keeps stopping voice storage. Judgment on continuation of stopping voice storage in the voice storage apparatus 103 is effected by a flow of the external message/voice acquisition processing 501 and the transfer judgment 504. On the other hand, the exchange 102 issues a sounding request 406 to the second private telephone 105 which is a destination to which transfer is requested.

When the second private telephone 105 responds to the call transfer, the exchange 102 receives a call response 407. Since the service between the first private telephone 101 and the second private telephone 105 has started, the exchange 102 transmits the connection notification 408 to the voice storage apparatus 103.

Transmission of the connection notification 408 is carried out by the procedure similar to that of transmission of the connection notification 401.

Upon receiving the connection notification 408, the voice storage apparatus 103 restarts voice storage. Judgment on start of voice storage in the voice storage apparatus 103 is carried out by a flow of the voice storage start processing 503 through the external message/voice acquisition processing 501 and the connection judgment 502. The voice storage start processing is effected by the procedure similar to that when receiving the connection notification 401.

Then, when the service is terminated and the second private telephone 105 gets on the hook, the exchange 102 receives the on-hook 409. Since the service between the first telephone 101 and the second private telephone 105 is terminated, an end notification 410 is transmitted to the voice storage apparatus 103. Transmission of the end notification 410 is performed by the procedure similar to that of the connection notification 401.

Upon receiving the end notification 410, the voice storage apparatus 103 stops voice storage. Judgment on end of voice storage in the voice storage apparatus 103 is carried out by a flow of the voice storage end processing 508 through the external message/voice acquisition processing 501 and the end judgment 507. The voice storage end processing is effected by the procedure similar to that of the voice storage start processing.

Incidentally, although FIG. 4 shows the case where the service with a destination of transfer (second private telephone 105) is achieved by hold/transfer, it can be readily analogized that voice storage can be realized by the similar means even if the service with a destination of transfer is not achieved, hold is canceled, and thereafter the service between the first telephone 101 and the first private telephone 104 is restarted.

Further, when the service between the first telephone 101 and the first private telephone 104 is being held and transferred, it can be easily analogized that voice storage can be realized by the similar means even if the service between the first telephone 101 and the first private telephone 104 is terminated.

As described above, in this embodiment, since the exchange transmits the external message and the voice data having the time stamps imparted thereto and the voice storage apparatus is provided with the means for establishing synchronization based on the time stamps and controlling the recorded voice, it is possible to cut the unnecessary voice other than the speech communication generated at the time of the hold/transfer operation and store the voice.

Incidentally, description has been given as to the case of two telephones, i.e., the first private telephone and the second private telephone in the above embodiment, this embodiment can be realized when a number of such telephones is one, three or above, and the similar advantage can be demonstrated.

### (Second Embodiment)

A second embodiment of the voice storage system according to the present invention will now be described. This second embodiment is the voice storage system which can rapidly cope with a request of changing the reproduced voice from the telephone when this request is made during reproducing the voice. The block structure of the system according to the second embodiment can be also shown in FIG. 1. Description as to FIG. 1 has been already given in the first embodiment, and it is omitted here. The exchange 102 and the voice storage apparatus 103 constituting the second embodiment will now be described hereinafter.

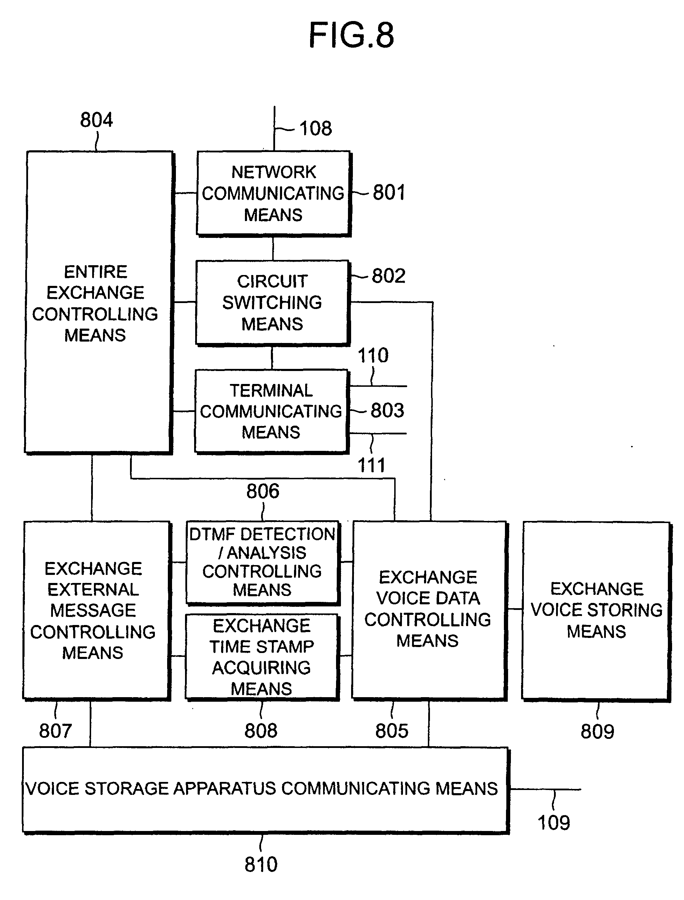

The detailed structure of the exchange 102 in the second embodiment will be explained with reference to FIG. 8. In FIG. 8, since reference numerals 801 to 804 are similar to reference numerals 201 to 204 in FIG. 2, thereby omitting the explanation. Besides, the exchange 102 includes: exchange voice data controlling means 805 for controlling the voice data acquired from the circuit switching means 802 and the voice data transmitted from the voice storage apparatus 103; DTMF detection/analysis controlling means 806 for detecting/analyzing DTMF information from the voice data acquired from the circuit switching means 802 and converting this information into key information (by the first telephone 101); exchange external message controlling means 807 for generating an external message from an event acquired from the entire exchange controlling means 804 and the key information acquired from the DTMF detection/analysis controlling means 806 and, on the other hand, controlling the external message transmitted from the voice storage apparatus 103; exchange time stamp acquiring means 808 for acquiring time stamps from the voice data and the external message transmitted from the voice storage apparatus 103; exchange voice storing means 809 for storing the reproduced voice transmitted from the voice storage apparatus 103; and voice storage apparatus communicating means 810 for communicating with the voice storage apparatus 103.

The exchange voice storing means 809 constitutes a reproduced voice buffer, and the reproduced voice transmitted from the voice storage apparatus 103 through the communication path 109 is temporarily stored in the exchange voice storing means 809, then read from this means and transmitted to the first telephone 101. By doing so, even if there is fluctuation in the arrival time of the voice data in the communication path 109, the stable reproduced voice can be transmitted to the first telephone 101 by the circuit switched communication. The reproduced voice stored in the exchange voice storing means 809 is controlled by the entire exchange controlling means 804 based on the control information and the time stamp of the external message transmitted from the voice storage apparatus 103.

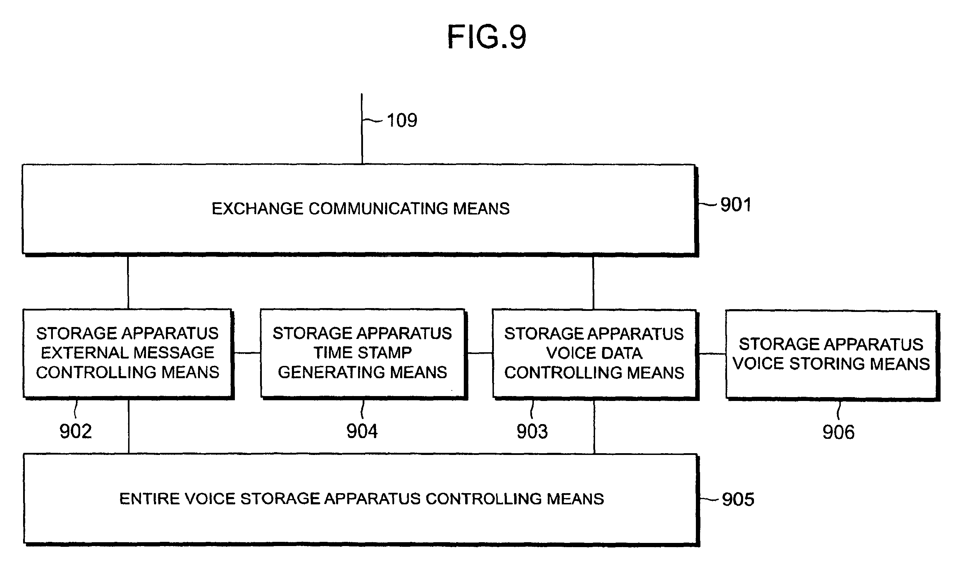

Description will now be given as to the detailed structure of the voice storage apparatus 103 in the second embodiment with reference to FIG. 9. The voice storage apparatus 103 includes: exchange communicating means 901 which is similar to 301 in FIG. 3; storage apparatus external message controlling means 902 which performs control such as fetching the external message received by the exchange communicating means 901 and creates an external message to be transmitted to the exchange 102; storage apparatus voice data controlling means 903 for controlling the reproduced voice to be transmitted to the exchange 102; storage apparatus time stamp generating means 904 for generating a time stamp; entire voice storage apparatus controlling means 905 similar to 305 in FIG. 3; and storage apparatus voice storing means 906 for storing therein the reproduced voice to be transmitted to the exchange 102.

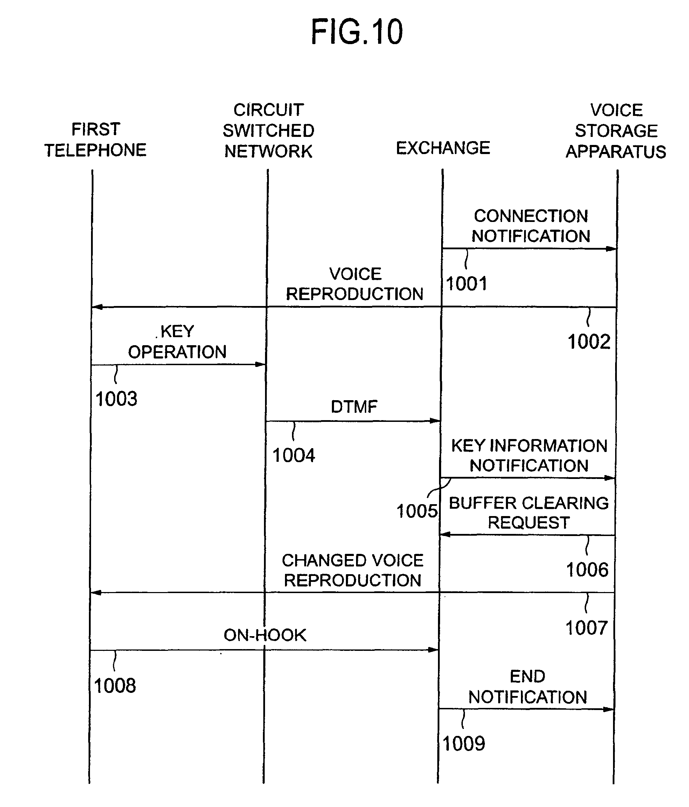

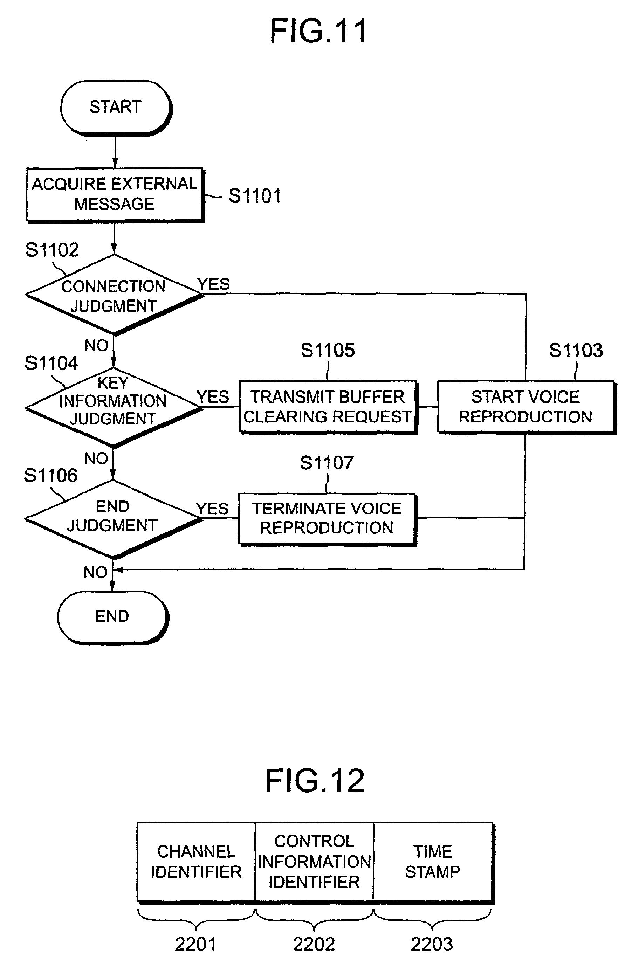

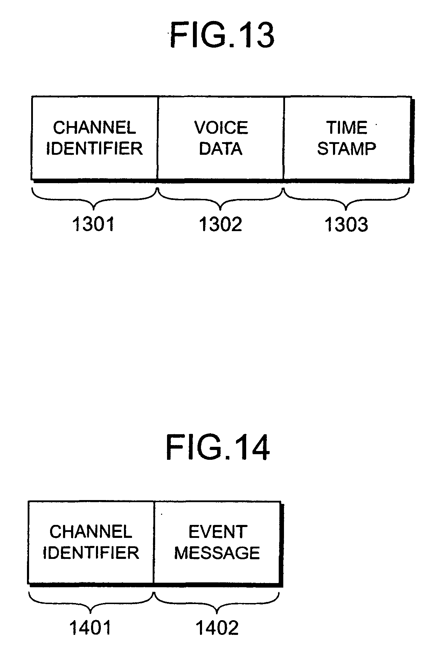

The voice storage system having the above-described configuration will now be described with reference to FIGS. 10 to 14. FIG. 10 is a sequence diagram showing a connection operation of telephones in the voice storage system. FIG. 11 shows a sequential operation flow on the voice storage apparatus. FIG. 12 shows a data structure of the external message information transmitted from the voice storage apparatus 103 to the exchange 102 by the control channel on the communication path 109. In FIG. 12, reference numeral 2201 denotes a channel identifier field for identifying a call during reproduction. Reference numeral 2202 designates a control information identifier field for storing information required for controlling the voice on the exchange 102. Reference numeral 2203 represents a time stamp filed in which a time for transmitting the external message is written. FIG. 13 shows a data structure of the voice data information transmitted from the voice storage apparatus 103 to the exchange 102 by the voice channel on the communication path 109. Reference numeral 1301 denotes a channel identifier field for identifying a call during reproduction. Reference numeral 1302 designates a voice data filed for storing actual data of the reproduced voice. Reference numeral 1303 represents a time stamp field in which a time for transmitting the voice data is written. FIG. 14 shows the external message information transmitted from the exchange 102 to the voice storage apparatus 103 by the control channel on the communication path 109. Reference numeral 1401 denotes a channel identifier field for identifying a call during reproduction. Reference numeral 1402 designates an event message field for storing therein an event message such as key operation information by the first telephone 101.

Referring to FIG. 10, description will be given as to a sequential flow. That is, reproduction of the voice is started by commencing connection of the first telephone 101, the key operation by the first telephone 101 is detected/analyzed as DTMF and transmitted to the voice storage apparatus 103 as the key information by the exchange 102, the voice storage apparatus 103 transmits a buffer clearing request from the key information to the exchange 102 and the changed voice to the first telephone 101, the exchange 102 performs buffer clearing for the voice, and reproduction of the voice is terminated by completion of connection of the first telephone 101.

When connection between the first telephone 101 and the exchange 102 is started, the exchange 102 transmits the connection notification 1001 to the voice storage apparatus 103. The connection notification transmission processing will now be described in detail. The connection notification 1001 is generated by the exchange external message controlling means 807. The exchange external message controlling means 807 creates the connection notification 1001 in the form of an external message based on an event message indicative of the channel identifier and the connection notification acquired by the entire exchange controlling means 804, and the voice storage apparatus communicating means 808 transmits the connection notification 101 by the control channel on the communication path 109.

Upon receiving the connection notification 1001, the voice storage apparatus 103 starts voice reproduction 1002 and transmits the reproduced voice. Judgment on start of voice reproduction in the voice storage apparatus 103 is effected by a flow of the voice reproduction start processing S1103 through the external message/voice acquisition processing S1101 and the connection judgment S1102. The voice reproduction start processing will now be described in detail.

The storage apparatus external message controlling means 902 of the voice storage apparatus 103 fetches the external message received by the exchange communicating means 901 from the control channel on the communication path 109, analyzes it and transmits the connection notification to the entire voice storage apparatus controlling means 905. The entire voice storage apparatus controlling means 905 indicates the storage apparatus voice data controlling means 903 the voice data to be read from the storage apparatus voice storing means 906, and the storage apparatus voice data controlling means 903 generates the voice reproduction 1002 in the form of voice data based on the voice data read from the storage apparatus voice storing means 906, the channel identifier analyzed by the storage apparatus external message controlling means 902 and the time stamp indicative of a transmission time obtained by the storage apparatus time stamp generating means 904. The exchange communicating means 901 transmits the voice reproduction 1002 by the voice channel on the communication path 109.

At the same time, the storage apparatus external message controlling means 902 creates the external message based on the analyzed channel identifier, the control information identifier, and the time stamp indicative of a transmission time acquired from the storage apparatus time stamp generating means 904, and the exchange communicating means 901 transmits the created external message by the control channel on the communication path 109.

The exchange 102 temporarily stores the received reproduced voice in the reproduction buffer of the exchange voice information storing means 809, and then transmits it by circuit switched communication. The first telephone 101 receives the reproduced voice 1002 transmitted through the exchange 102 and the circuit switched network 106. Subsequently, when the first telephone 101 presses a receiver button, the key operation 1003 is transmitted to the circuit switched network 106.

Upon receiving the key operation 1003, the circuit switched network 106 converts it into DTMF 1004 and transmits it to the exchange 102. The exchange 102 detects/analyzes the DTMF 1004 and transmits the key information notification 1005 to the voice storage apparatus 103. The key information notification transmission processing will now be described in detail.

The key information notification 1005 is generated by the exchange external message controlling means 807. The exchange external message controlling means 807 obtains the channel identifier from the entire exchange controlling means 804, acquires the key information (event message) by the first telephone 101 obtained by detecting/analyzing the DTMF from the voice data obtained by the DTMF detection/analysis controlling means 806 through the circuit switching means 802, and creates the key information notification 1005 in the form of an external message based on them. The voice storage apparatus communicating means 810 transmits it through the control channel on the communication path 109.

Upon receiving the key information notification 1005, the voice storage apparatus 103 transmits the buffer clearing request 1006 to the exchange. At the same time, the voice storage apparatus 103 starts reproduction of the changed voice and transmits the changed voice reproduction 1007. Judgment on buffer clearing request transmission and start of voice reproduction is effected by a flow of the buffer clearing request transmission processing S1105 and the voice reproduction start processing S1103 through the external message/voice acquisition processing S1101 and the key information judgment S1104. Transmission of the buffer clearing request 1006 and the changed voice reproduction 1007 is carried out by the procedure similar to that of transmission of the voice reproduction 1002.

Upon receiving the buffer clearing request 1006, the exchange 102 clears the voice buffer. The voice buffer clearing processing will now be described in detail. The exchange 102 obtains the external message from the control channel on the communication path 109 and the voice data from the voice channel on the communication path 109 by the voice storage apparatus communicating means 810. The exchange external message controlling means 807 which has fetched the external message uses the exchange time stamp acquiring means 808 to acquire the time stamp from the external message and outputs it to the entire exchange controlling means 804. On the other hand, the exchange voice data controlling means 805 which has fetched the voice data uses the exchange time stamp acquiring means 808 to acquire the time stamp from the voice data and outputs it to the entire exchange controlling means 804.

The entire exchange controlling means 804 establishes synchronization based on each time stamp, controls the exchange voice data controlling means 805, and clears the reproduced voice having the time stamp which precedes the time stamp of the external message from the reproduced voice buffer of the exchange voice storing means 809.

Further, the received changed reproduced voice is temporarily stored in the reproduction buffer of the exchange voice storing means 809, and then transmitted by circuit switched communication. The first telephone 101 receives the changed reproduced voice 1007 transmitted through the exchange 102 and the circuit switched network 106. Subsequently, when connection is terminated and the first telephone 101 gets on the hook, the exchange 102 receives the on-hook 1008.

The exchange 102 transmits the end notification 1009 to the voice storage apparatus 103. Transmission of the end notification 1009 is carried out by the procedure similar to that of transmission of the connection notification 1001. When the voice storage apparatus 103 receives the end notification 1009, it terminates the voice reproduction. Judgment on end of voice reproduction in the voice storage apparatus 103 is effected by a flow of the voice reproduction end processing S1107 through the external message/voice acquisition processing S1101 and the end judgment S1106.

As described above, in this embodiment, the voice storage apparatus transmits the external message and the voice data having the time stamps imparted thereto to the exchange, the exchange establishes synchronization based on the time stamps, and the means for clearing the unnecessary voice data from the buffer is provided. Therefore, when the reproduced voice change request is issued by an event from the telephone during voice reproduction, it is possible to carry out the smooth voice change processing by clearing the voice before change remaining in the reproduced voice buffer.

### (Third Embodiment)

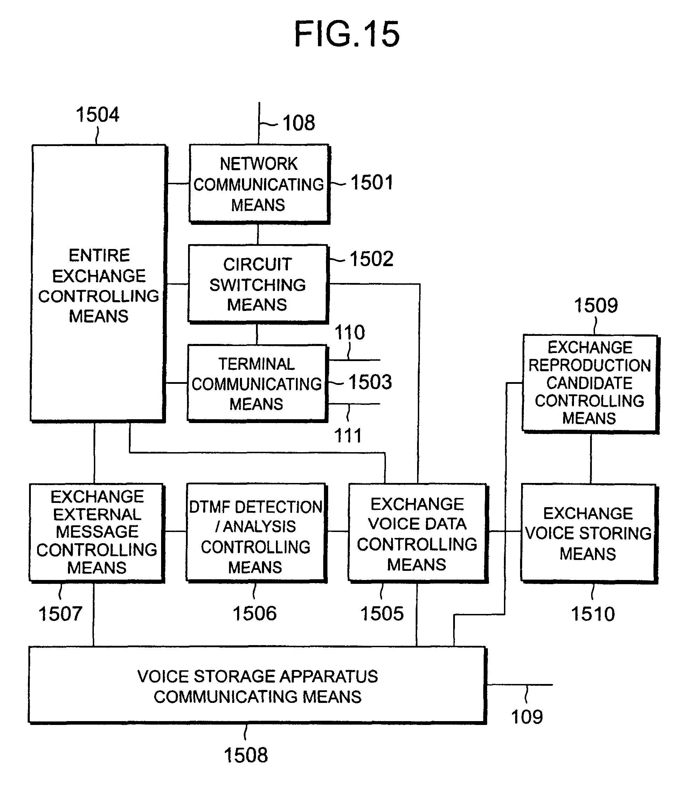

A third embodiment of the voice storage system according to the present invention will now be described. In the voice storage system according to the third embodiment, by storing in the exchange a part of the whole voice which can be a next reproduction candidate, it is possible to rapidly cope with a request for changing the reproduced voice from the telephone. The structure of this embodiment will now be described with reference to FIGS. 15 to 23.

The block diagram of the system according to this embodiment can be also shown in FIG. 1. Although description on FIG. 1 is omitted since it has been given in the first embodiment, the definition of the communication path 109 is changed in the third embodiment. The communication path 109 in the third embodiment can perform communication of the voice data by the voice channel and communication of the external message by the control channel, and also can effect communication of a part of the whole voice which can be a next reproduction candidate by the reproduction candidate voice channel. The exchange 102 and the voice storage apparatus 103 constituting this embodiment will now be described hereinafter.

The detailed structure of the exchange 102 in this embodiment will now be explained with reference to FIG. 15. In FIG. 15, since reference numerals 1501 to 1504 are similar to 201 to 204 in FIG. 2, their explanation is omitted. Reference numerals 1505 to 1507 are similar to 805 to 807 in FIG. 8, thereby omitting their explanation. Besides, the exchange 102 includes: voice storage apparatus communicating means 1508 for effecting communication with the voice storage apparatus 103; exchange reproduction candidate controlling means 1509 for conducting data control of a part of a leading portion of the whole voice which has been transmitted from the voice storage apparatus 103 and can be a next reproduction candidate; and exchange voice storing means 1510 which stores the reproduced voice obtained from the voice data controlled by the entire exchange controlling means 1504 and, at the same time, stores data of a part of a leading portion of the whole voice which can be a next reproduction candidate from the exchange reproduction candidate controlling means 1509.

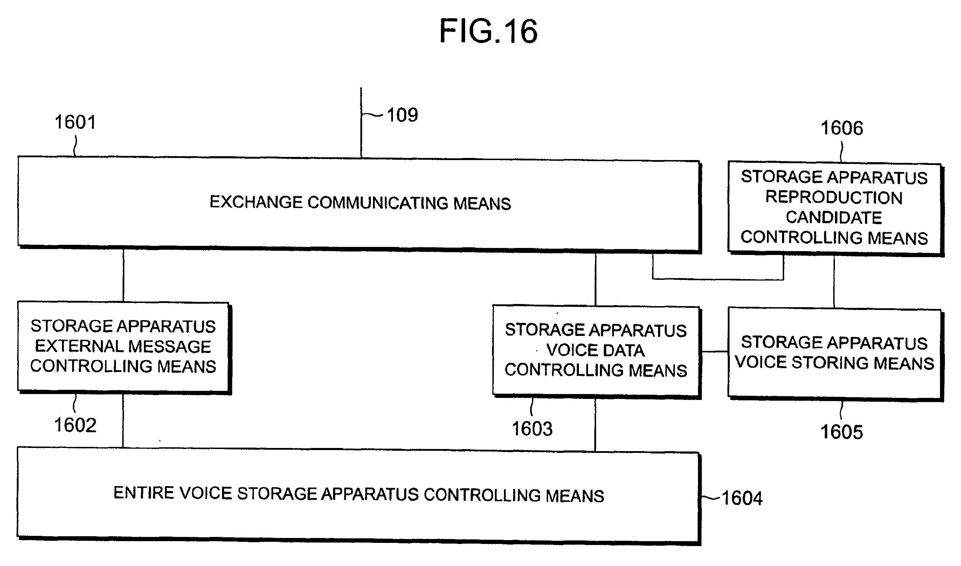

Furthermore, the detailed structure of the voice storage apparatus 103 in this embodiment will now be described with reference to FIG. 16. In FIG. 16, since reference numerals 1601 to 1603 are similar to 901 to 903 in FIG. 9, their explanation is omitted. Reference numerals 1604 and 1605 are similar to 905 and 906 in FIG. 9, thereby omitting their explanation. Besides, the voice storage apparatus 103 includes storage apparatus reproduction candidate controlling means 1606 which acquires a part of the whole voice which can be a next reproduction candidate of the current voice data transmitted by the exchange communicating means 1601 and transmits it to the exchange 102.

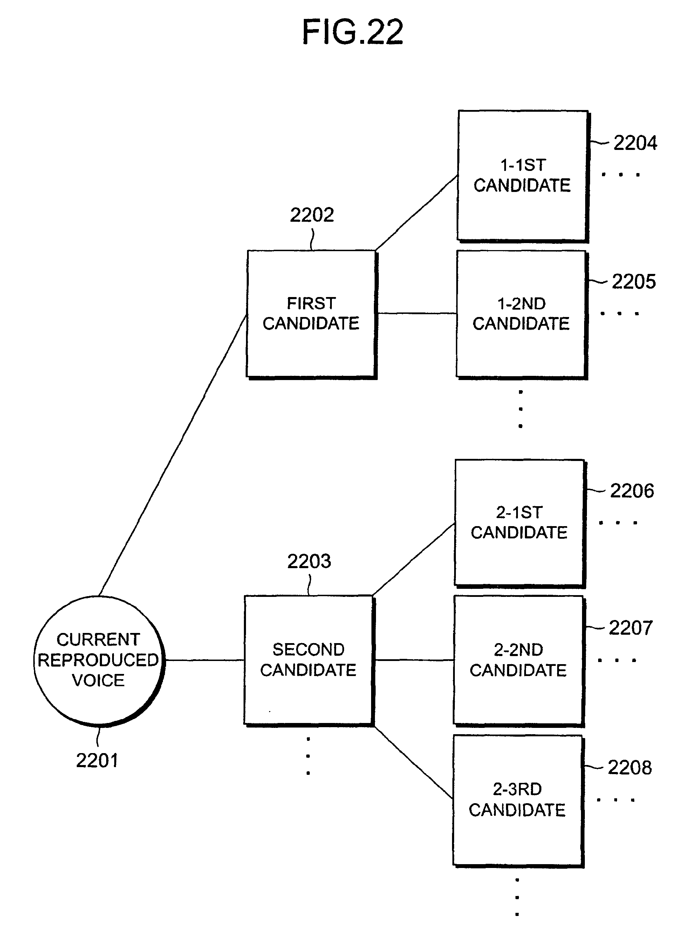

Here, the storage apparatus reproduction candidate controlling means 1606 selects a reproduction candidate based on the reproduction candidate selection information shown in FIG. 22. In FIG. 22, the voice which is currently reproduced is the current reproduced voice 2201. The voice which is predicted to be reproduced after the current reproduced voice 2201 is the first candidate 2202 and the second candidate 2203. The voice which is predicted to be reproduced next after the first candidate 2202 is the 1-1st candidate 2204 and the 1-2nd candidate 2205. The voice which is predicted to be reproduced next after the second candidate 2203 is the 2-1st candidate 2206, the 2-2nd candidate 2207 and the 2-3rd candidate 2208.

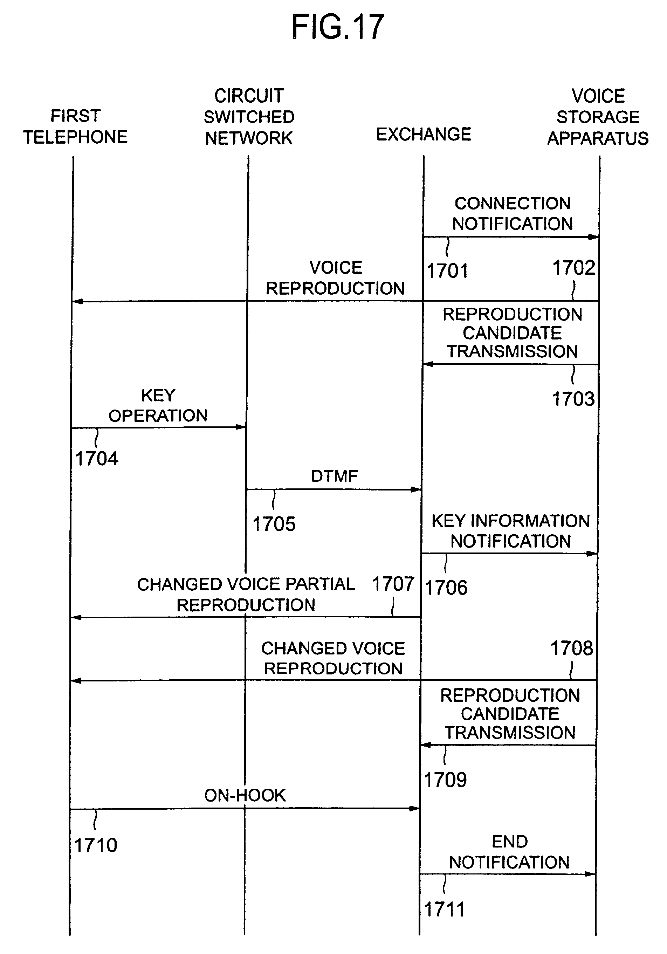

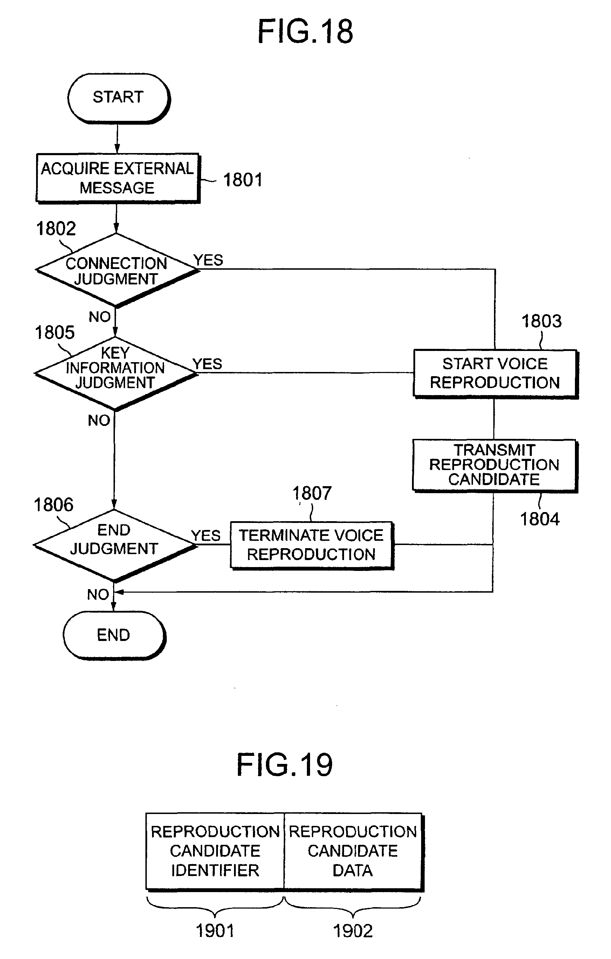

The operation of the voice storage system having the above structure will now be described with reference to FIGS. 17 to 23. FIG. 17 is a sequence diagram showing a connection operation of telephones in the voice storage apparatus. FIG. 18 shows a sequential operation flow on the voice storage apparatus. FIG. 19 shows the data structure of the reproduction candidate selection information to be transmitted from the voice storage apparatus 103 to the exchange 102 by the reproduction candidate voice channel on the communication path 109. In FIG. 19, reference numeral 1901 denotes a reproduction candidate identifier field for identifying a part of the voice which can be a next reproduction candidate. Reference numeral 1902 designates a reproduction candidate field for storing therein a part of the voice which can be a next reproduction candidate.

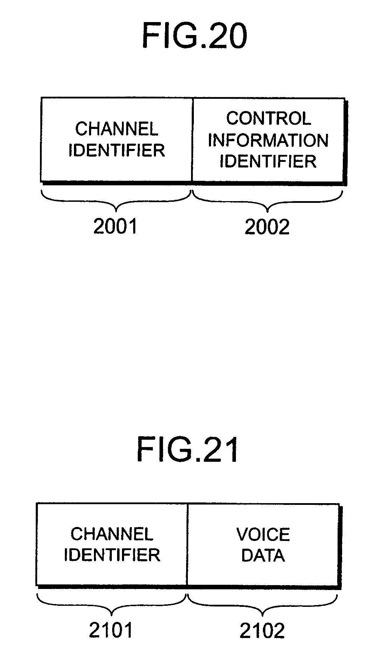

FIG. 20 shows the data structure of the external message information to be transmitted from the voice storage apparatus 103 to the exchange 102 by the control channel on the communication path 109. In FIG. 20, reference numeral 2001 denotes a channel identifier field for identifying a call during reproduction. Reference numeral 2002 designates a control information identifier field for storing therein information required for controlling the voice on the exchange 102.

FIG. 21 shows the data structure of the voice data information to be transmitted from the voice storage apparatus 103 to the exchange 102 by the voice channel on the communication path 109. Reference numeral 2101 denotes a channel identifier field for identifying a call during reproduction. Reference numeral 2102 designates a voice data field for storing therein actual data of the reproduced voice. FIG. 22 shows the reproduction candidate selection information.

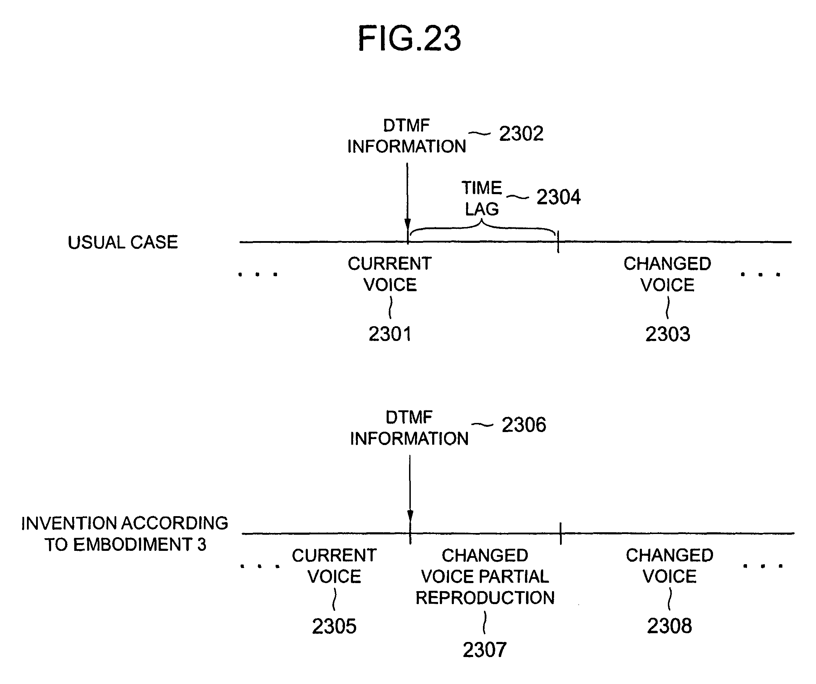

FIG. 23 shows the effect obtained by the present invention of this embodiment. Incidentally, the data structure of the external message information which is transmitted from the exchange 102 to the voice storage apparatus 103 through the control channel on the communication path 109 is similar to that shown in FIG. 14, thereby omitting its explanation.

In FIG. 17, description will be given as to a sequential flow. That is, voice reproduction is started by commencing connection of the first telephone 101 and, at the same time, a part of the whole voice which can be a next reproduction candidate is transmitted. Further, the exchange 102 detects/analyzes the key operation by the first telephone 101 as the DTMF and transmits it as the key information to the voice storage apparatus 103. Simultaneously, reproduction of a part of the changed voice to the first telephone 101 is started, and the voice storage apparatus 103 transmits the changed voice from the key information to the first telephone 101 through the exchange 102 (after completion of reproduction of a part of the changed voice). Also, voice reproduction is stopped by termination of connection of the first telephone 101.

When connection between the first telephone 101 and the exchange 102 is started, the exchange 102 transmits the connection notification 1701 to the voice storage apparatus 103. The connection notification transmission processing will now be described in detail.

The connection notification 1701 is created in the form of an external message by the exchange external message controlling means 1507 based on the channel identifier acquired from the entire exchange controlling means 1504 and the event message indicative of the connection notification, and the voice storage apparatus communicating means 1508 transmits this created notification through the control channel on the communication path 109.

Upon receiving the connection notification 1701, the voice storage apparatus 103 starts voice reproduction and transmits the voice reproduction 1702 and the reproduction candidate transmission 1703. Judgment on start of voice reproduction and transmission of the reproduction candidate in the voice storage apparatus 103 is effected by a flow of the voice reproduction start processing 1803 and the reproduction candidate transmission processing 1804 through the external message acquisition processing 1801 and the connection judgment 1802. The voice reproduction start processing and the reproduction candidate transmission processing will now be described in detail.

The storage apparatus external message controlling means 1602 of the voice storage apparatus 103 fetches the external message received by the exchange communicating means 1601 through the control channel on the communication path 109, analyzes it and transmits the connection notification to the entire voice storage apparatus controlling means 1604. The entire voice storage apparatus controlling means 1604 indicates the storage apparatus voice data controlling means 1603 the voice data to be read from the storage apparatus voice storing means 1605, and the storage apparatus voice data controlling means 1603 creates the voice reproduction 1702 in the form of voice data based on the voice data read from the storage apparatus voice storing means 1605 and the channel identifier analyzed by the storage apparatus external message controlling means 1602. The exchange communicating means 1601 transmits the created voice reproduction 1702 through the voice channel on the communication path 109.

At the same time, the storage apparatus external message controlling means 1602 generates the external message based on the analyzed channel identifier and the control information identifier, and the exchange communicating means 1601 transmits the created external message through the control channel on the communication path 109.

Furthermore, the storage apparatus reproduction candidate controlling means 1606 acquires a part of the whole voice which can be a next reproduction candidate as the reproduction candidate data from the storage apparatus voice storing means 1605 and creates data having the reproduction candidate data structure with a reproduction candidate identifier imparted thereto, and the exchange communicating means 1601 transmits it through the reproduction candidate voice channel on the communication path 109.

The first telephone 101 receives the reproduced voice 1702 transmitted through the exchange 102 and the circuit switched network 106. On the other hand the exchange 102 receives the reproduction candidate transmission 1703 and stores therein a part of the whole voice which can be a next reproduction candidate. The reproduction candidate storage processing will now be described in detail.

The reproduction candidate data is acquired from the reproduction candidate voice channel on the communication path 109 by the voice storage apparatus communicating means 1508. The exchange reproduction candidate controlling means 1509 stores the acquired reproduction candidate data by using the exchange voice storing means 1510 with the reproduction candidate identifier as a reference.

Subsequently, when the first telephone 101 presses the receiver button, the key operation 1704 is transmitted to the circuit switched network 106. Upon receiving the key operation 1704, the circuit switched network 106 converts it into the DTMF 1705 and transmits it to the exchange 102. The exchange 102 detects/analyzes the DTMF 1705 and transmits the key information notification 1706 to the voice storage apparatus 103. At the same time, the exchange 102 transmits the changed voice partial reproduction 1707 to the first telephone 101. The key information notification transmission processing and the reproduction candidate transmission processing will now be described in detail.

The key information notification 1706 is generated by the exchange external message controlling means 1507. The exchange external message controlling means 1507 acquires the channel identifier from the entire exchange controlling means 1504, also acquires the key information (event message) by the first telephone 101 obtained by detecting/analyzing the DTMF from the voice data obtained by the DTMF detection/analysis controlling means 1506 through the circuit switching means 1502, and generates the key information notification 1706 in the formed of an external message based on them. The voice storage apparatus communicating means 1508 transmits the key information notification 1706 through the control channel on the communication path 109.

As to the changed voice partial reproduction 1707, the exchange reproduction candidate controlling means 1509 identifies the voice to be subsequently reproduced, and a part of that voice is read from the exchange voice storing means 1510 and reproduced. The exchange reproduction candidate controlling means 1509 identifies the voice to be subsequently reproduced based on the channel identifier obtained from the entire exchange controlling means 1504 and the key information (event message) by the first telephone 101 obtained by detecting/analyzing the DTMF from the voice data acquired by the DTMF detection/analysis controlling means 1506 from the circuit switching means 1502. Since a part of the voice which can be a next reproduction candidate is stored in the exchange voice storing means 1510 in accordance with each reproduction candidate identifier, that part is reproduced. It is to be noted that all parts other than the required part of the voice are unnecessary and they are hence deleted.

The first telephone 101 receives the change voice partial reproduction 1707 transmitted through the exchange 102 and the circuit switched network 106. After completion of reproduction, the first telephone 101 receives the changed voice reproduction 1708. On the other hand, the exchange 102 receives the reproduction candidate transmission 1709 and stores a part of the whole voice which can be a next reproduction candidate. The processing for storing a part of the whole voice which can be a next reproduction candidate is carried out by the procedure similar to that of the processing for receiving the reproduction candidate transmission 1703.

Then, when connection is terminated and the first telephone 101 gets on the hook, the exchange 102 receives the on-hook 1710. The exchange 102 transmits the end notification 1711 to the voice storage apparatus 103. Transmission of the end notification 1711 is effected by the procedure similar to that for transmitting the connection notification 1701.

Upon receiving the end notification 1711, the voice storage apparatus 103 terminates voice reproduction. Judgment on end of vice reproduction in the voice storage apparatus 103 is effected by a flow of the voice reproduction end processing 1807 through the external message acquisition processing 1801 and the end judgment 1806.

FIG. 23 shows the effect in this embodiment. Usually, upon receiving the DTMF information 2302 as the changed voice information during reproduction of the current voice 2301, the exchange transmits the change information to the voice storage apparatus, and the changed voice 2303 is reproduced after receiving the changed voice transmitted from the voice storage apparatus. Therefore, a time lag 2304 is produced. In the present invention, however, since a part of the whole voice which can be a next reproduction candidate is stored in the exchange, the exchange can immediately perform the changed voice partial reproduction 2307 in the exchange upon receiving the DTMF information 2306 as the changed voice information during reproduction of the current voice 2305. Thus, there can be obtained an effect that the time lag (time lag 2304) till the change voice 2308 is reproduced can be eliminated.

As described above, in the system according to this embodiment, a part of the whole voice which can be a next reproduction candidate is stored in the exchange, and there is provided means for starting reproduction of the part of the voice concurrently with reception of the voice change command. Therefore, when a reproduced voice change request is issued by an event from the telephone during voice reproduction, the time lag till the voice after change is stored in the reproduced voice buffer is stored can be reduced by reproducing a part of the changed voice from a part of the whole voice which has been prepared in advance and can be a next reproduction candidate.

### (Fourth Embodiment)

A fourth embodiment of the voice storage system according to the present invention will now be described. The fourth embodiment realizes the function similar to that of the voice storage system according to the second embodiment with the reduced processing burden on the exchange. The block structure of the system according to the fourth embodiment can be also shown in FIG. 1. Explanation of FIG. 1 has been already given in connection with the first embodiment, thereby omitting it. The exchange 102 and the voice storage apparatus 103 constituting the fourth embodiment will now be described hereinafter.

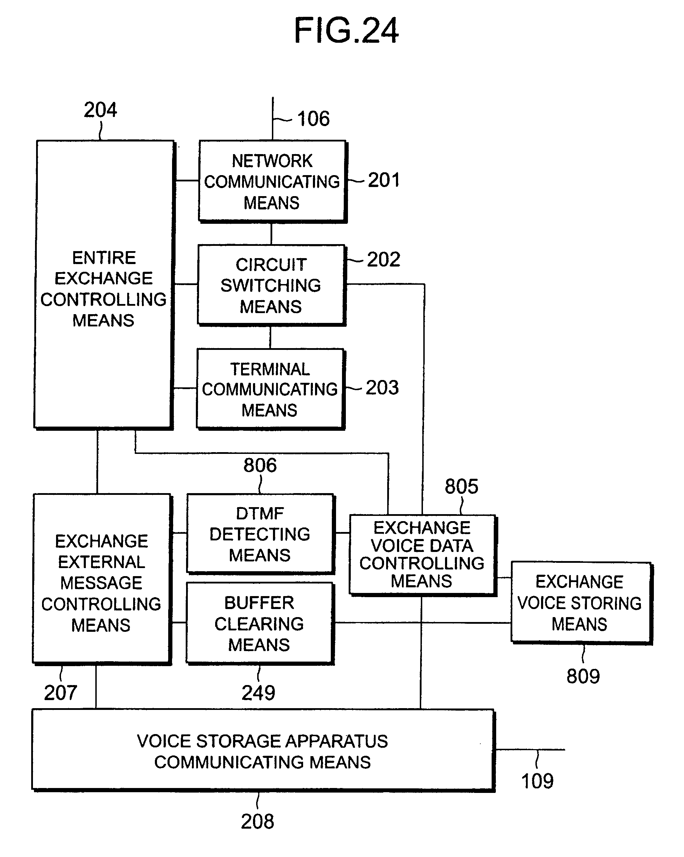

FIG. 24 shows a detailed structure of the exchange 102 according to this embodiment. In FIG. 24, reference numerals 201 to 203 and 207 are the same as 801 to 803 and 807 in FIG. 8, and 805, 806 and 809 are equal to like reference numerals in FIG. 8. The system according to this embodiment has buffer clearing means 249. When a buffer clearing command is obtained from the exchange external message controlling means 207, the buffer clearing means 249 clears the reproduced voice stored in the exchange voice storing means 809 from the buffer. Moreover, the exchange external message controlling means 207 analyzes the external message transmitted from the voice storage apparatus 103 and outputs the buffer clearing command to the buffer clearing means 249.

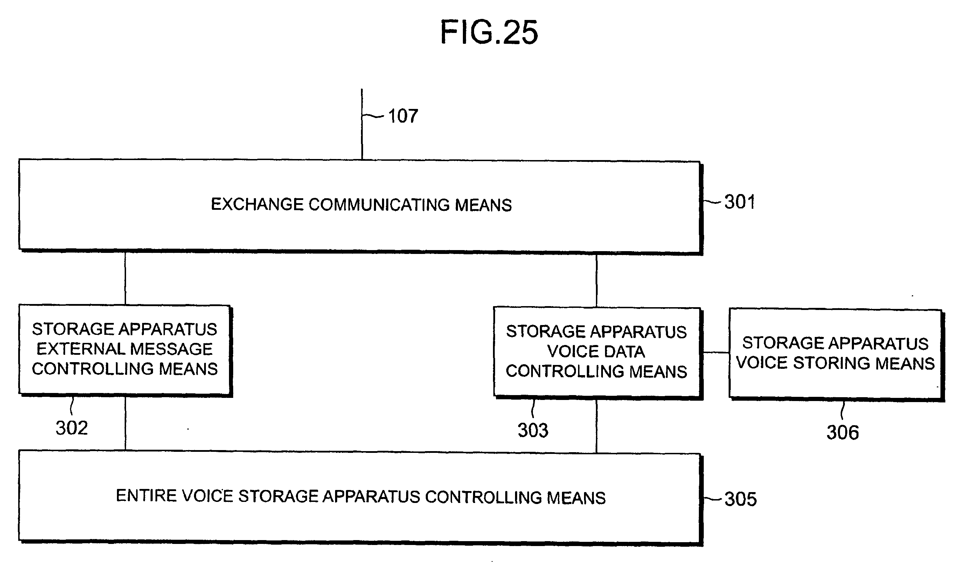

In addition, FIG. 25 shows the detailed structure of the voice storage apparatus 103 in this embodiment. This apparatus includes: exchange communicating means for communicating with the exchange 102; storage apparatus external message controlling means 302 for controlling an external message received by the exchange communicating means 301 and generating an external message transmitted to the exchange 102; storage apparatus voice data controlling means 303 for controlling reproduced voice to be transmitted to the exchange 102; entire voice storage apparatus controlling means 305 for controlling the entire voice storage apparatus 103; and storage apparatus voice storing means 306 for storing the reproduced voice to be transmitted to the exchange 102.

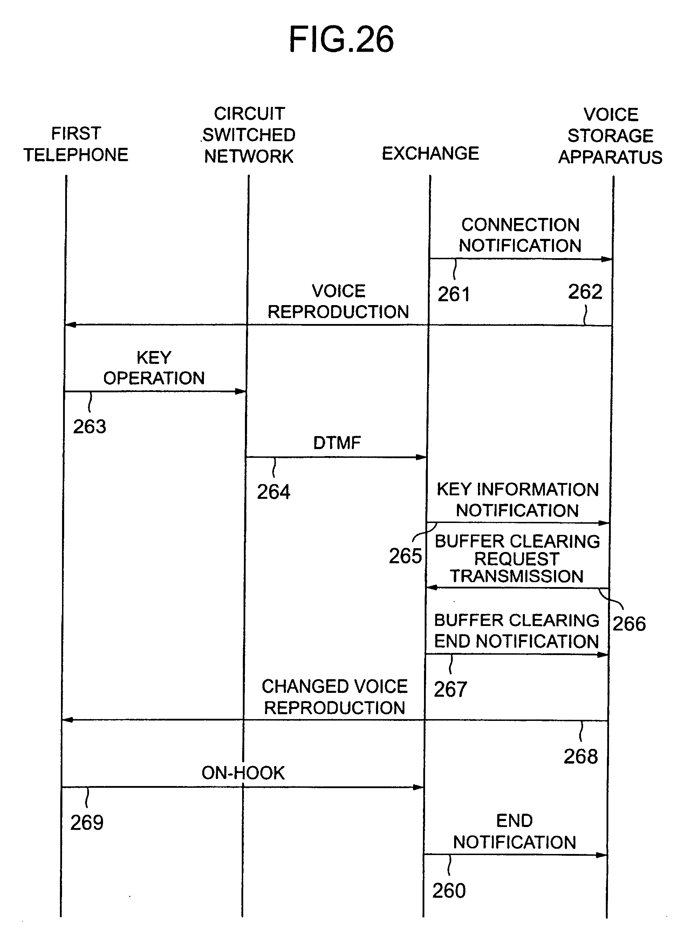

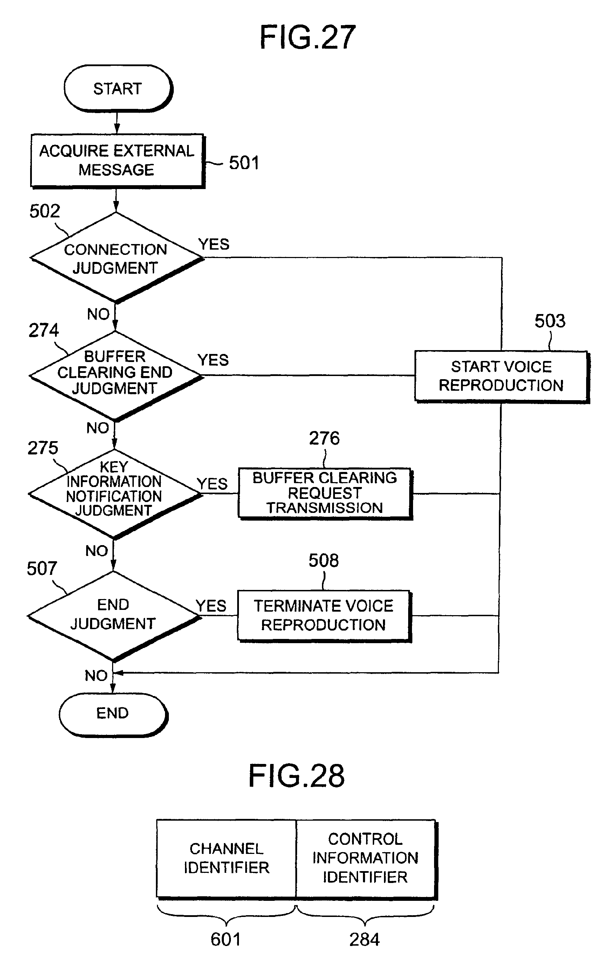

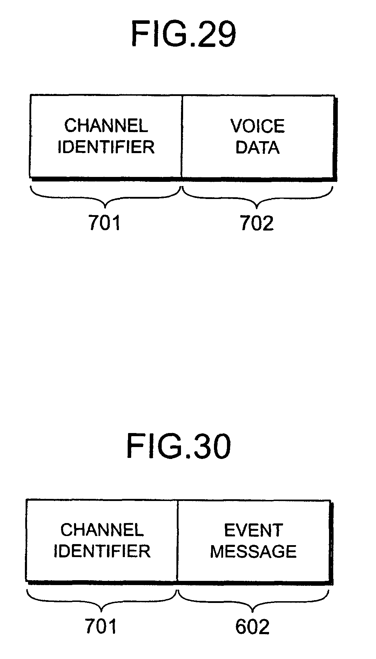

The operation of the voice storage system having the above-described structure will now be described. FIG. 26 is a sequence diagram showing a connection operation of telephones in the fourth embodiment of the voice storage system according to the present invention. FIG. 27 shows a sequential operation flow on the voice storage apparatus. In FIG. 27, steps having like reference numerals have the same content, thereby omitting their explanation. FIG. 28 shows the data structure of the external message information to be transmitted from the voice storage apparatus 103 to the exchange 102 through the control channel on the communication path 109. In FIG. 28, reference numeral 601 denotes a channel identifier field for identifying a call during reproduction. Reference numeral 284 designates a control information identifier field for storing information required for controlling voice on the exchange 102. FIG. 29 shows the data structure of the voice data information to be transmitted from the voice storage apparatus 103 to the exchange 102 through the voice channel on the communication path 109. Reference numeral 701 denotes a channel identifier field for identifying a call during reproduction. Reference numeral 702 designates a voice data field for storing actual data of the reproduced voice. FIG. 30 shows external message information to be transmitted from the exchange 102 to the voice storage apparatus 103 through the control channel on the communication path 109. Reference numeral 701 denotes a channel identifier field for identifying a call during reproduction. Reference numeral 602 designates an event message field storing therein an event message by the first telephone 101, for example, key operation information.

In FIG. 26, description will be given as to a sequential flow. That is, voice reproduction is started by commencing connection of the first telephone 101; the exchange 102 detects the key operation by the first telephone 101 as the DTMF and transmits it to the voice storage apparatus 103 as the key information; the voice storage apparatus 103 transmits a buffer clearing request from the key information to the exchange 102; the exchange 102 clears the buffer for the voice and transmits the buffer clearing end to the voice storage apparatus 103; the voice storage apparatus 103 transmits the changed voice to the first telephone 101; and voice reproduction is stopped by end of connection of the first telephone 101.

When connection between the first telephone 101 and the exchange 102 is started, the exchange 102 transmits the connection notification 261 to the voice storage apparatus 103. The detail of the connection notification transmission processing is the same as that of the second embodiment.

Upon receiving the connection notification 261, the voice storage apparatus 103 starts voice reproduction and transmits the voice reproduction 262. Judgment on start of voice reproduction in the voice storage apparatus 103 is effected by a flow of the voice reproduction start processing 503 through the external message acquisition processing 501 and the connection judgment 502. The voice reproduction start processing will now be described in detail.

The storage apparatus external message controlling means 302 of the voice storage apparatus 103 fetches the external message received by the exchange communicating means 301 from the control channel on the communication path 109, analyzes it and transmits the connection notification to the entire voice storage apparatus controlling means 305. The entire voice storage apparatus controlling means 305 indicates the storage apparatus voice data controlling means 303 the voice data to be read from the storage apparatus voice storing means 306, and the storage apparatus voice data controlling means 303 creates the voice reproduction 262 in the form of voice data based on the voice data read from the storage apparatus voice storing means 306 and the channel identifier analyzed by the storage apparatus external message controlling means 302. The exchange communicating means 301 transmits the created voice reproduction 262 through the voice channel on the communication path 109.

At the same time, the storage apparatus external message controlling means 302 generates the external message based on the analyzed channel identifier and the control information identifier, and the exchange communicating means 301 transmits the created external message through the control channel on the communication path 109.

The exchange 102 temporarily stores the received reproduced voice in the reproduction buffer of the exchange voice information storing means 208, and then transmits it by the circuit switched communication. The first telephone 101 receives the reproduced voice 262 transmitted through the exchange 102 and the circuit switched network 106.

Subsequently, when the first telephone 101 presses the receiver button, the key operation 263 is transmitted to the circuit switched network 106. Upon receiving the key operation 263, the circuit switched network 106 converts it into the DTMF 264 and transmits it to the exchange 102.

The exchange 102 detects the DTMF 264, and transmits the key information notification 265 to the voice storage apparatus 103. The detail of the key information notification transmission processing is the same as that of the second embodiment. When the voice storage apparatus 103 receives the key information notification 265, it transmits the buffer clearing request 266 to the exchange 102. Judgment on transmission of the buffer clearing request in the voice storage apparatus 103 is effected by a flow of the buffer clearing request transmission processing 276 through the external message acquisition processing 501, the connection judgment 502, the buffer clearing end judgment 274 and the key information notification judgment 275 shown in the flowchart of FIG. 27. Transmission of the buffer clearing request 266 is carried out by the procedure similar to that for transmitting the voice reproduction 262. Upon receiving the buffer clearing request 266, the exchange 102 clears the voice buffer. The voice buffer clearing processing will now be described in detail.

The voice storage apparatus communicating means 208 acquires the external message from the control channel on the communication path 109 and the voice data from the voice channel on the communication path 109. When the external message is analyzed by the exchange external message controlling means 207 and it is determined that the external message is a buffer clearing command, the buffer clearing means 249 clears all voice in the reproduced voice buffer of the exchange voice storing means 809.

Upon completion of buffer clearing, the exchange 102 transmits the buffer clearing end notification 267 to the voice storage apparatus 103. The buffer clearing end notification transmission processing will now be described in detail. The buffer clearing end notification 267 is created by the exchange external message controlling means 207 in the formed an external message based on the channel identifier obtained by the entire exchange controlling means 204 and the identifier indicative of end of the buffer clearing, and the voice storage apparatus communicating means 208 transmits the buffer clearing end notification 267 through the control channel on the communication path 109.

Upon receiving the buffer clearing end notification 267, the voice storage apparatus 103 starts reproduction of the changed voice and transmits the changed voice reproduction 268. Judgment on start of changed voice reproduction in the voice storage apparatus 103 is effected by a flow of the voice reproduction start processing 503 through the external message acquisition processing 501 and the buffer clearing end judgment 274. The changed voice reproduction 268 is transmitted by the procedure similar to that for transmitting the voice reproduction 262.

The first telephone 101 receives the change reproduced voice 268 transmitted through the exchange 102 and the circuit switched network 106. Then, when connection is terminated and the first telephone gets on the hook, the exchange 102 receives the on-hook 269. The exchange 102 transmits the end notification 260 to the voice storage apparatus 103. The end notification 260 is transmitted by the procedure similar to that for transmitting the connection notification 261.

When the voice storage apparatus 103 receives the end notification 260, it terminates voice reproduction. Judgment on end of voice reproduction in the voice storage apparatus 103 is effected by a flow of the voice reproduction end processing 508 through the external message acquisition processing 501 and the end judgment 507.

As described above, in this embodiment, after the exchange receives the buffer clearing command issued by the voice storage apparatus and the unnecessary voice data is cleared from the buffer, the buffer clearing end notification is thereafter transmitted, and the voice storage apparatus receives the buffer clearing end notification and also transmits the changed voice. Therefore, when a reproduced voice change request is issued by an event from the telephone during voice reproduction, it is possible to execute the smooth voice change processing by clearing the voice before change remaining in the reproduced voice buffer.

Further, in this case, it is good enough for the exchange to clear everything remaining in the buffer upon receiving an instruction from the voice storage apparatus. Therefore, as compared with the structure of the second embodiment in which a range to be cleared by the exchange itself must be identified, the processing burden can be reduced.

Furthermore, it can be readily analogized that the voice change processing can be realized by the similar means using a method by which the exchange is provided with a plurality of buffers and the exchange switches the reproduction buffer concurrently with reception of the buffer clearing command issued from the voice storage apparatus by the exchange.

Moreover, it can be also easily analogized that the voice change processing can be realized by the similar means using a method by which the voice storage apparatus transmits the changed voice having a change tag at a leading part thereof simultaneously with the buffer clearing command by the external message and the exchange which has received the buffer clearing command clears the unnecessary voice data including the change tag from the buffer.

### (Fifth Embodiment)

A fifth embodiment of the voice storage system according to the present invention will now be described. The fifth embodiment realizes the function similar to that of the voice storage system according to the third embodiment with the reduced processing burden on the exchange. The block structure of the system according to the fifth embodiment can be also shown in FIG. 1. Since explanation of FIG. 1 has been already given in connection with the first embodiment, it is omitted. Incidentally, as similar to the third embodiment, the communication path 109 includes a voice channel for transmitting/receiving voice data, a control channel for transmitting/receiving an external message and a reproduction candidate voice channel for transmitting/receiving a part of the whole voice which can be a next reproduction candidate.

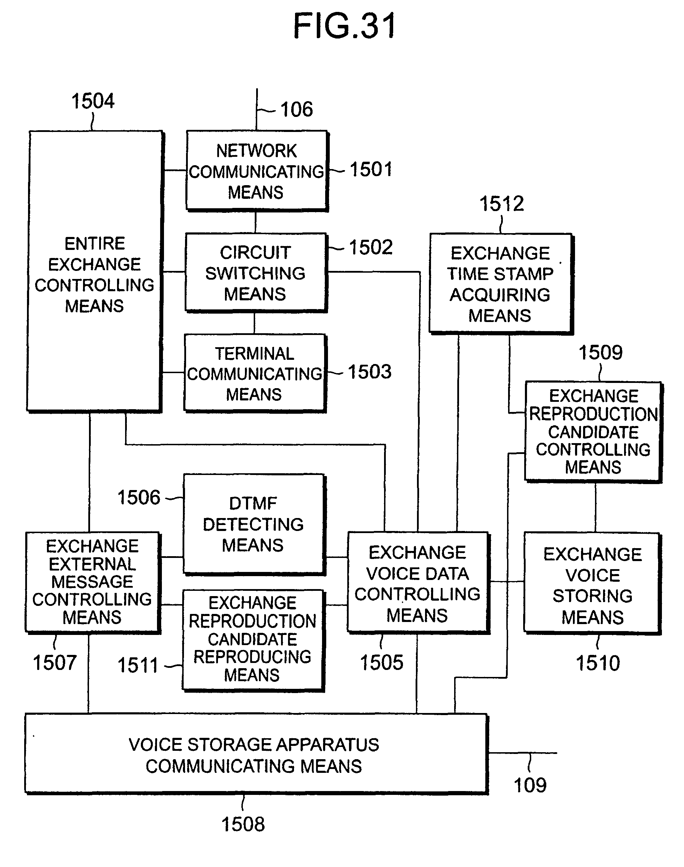

The exchange 102 and the voice storage apparatus 103 constituting the fifth embodiment will now be described. The exchange 102 has the structure shown in FIG. 31. In the drawing, reference numerals 1501 to 1510 are similar to those in the third embodiment (FIG. 15). Beside these members, the exchange 102 includes: exchange reproduction candidate reproducing means 1511 for reproducing a part of the voice which is stored in exchange voice storing means 1510 and is a reproduction candidate when the voice change command and the changed voice identifier are acquired from the exchange external message controlling means 1507; and exchange time stamp acquiring means 1512 for acquiring time stamps from the voice data and the reproduction candidate data transmitted from the voice storage apparatus 103. The exchange external message controlling means 1507 analyzes the external message transmitted from the voice storage apparatus 103 and outputs the voice change command and the changed voice identifier to the exchange reproduction candidate reproducing means 1511.

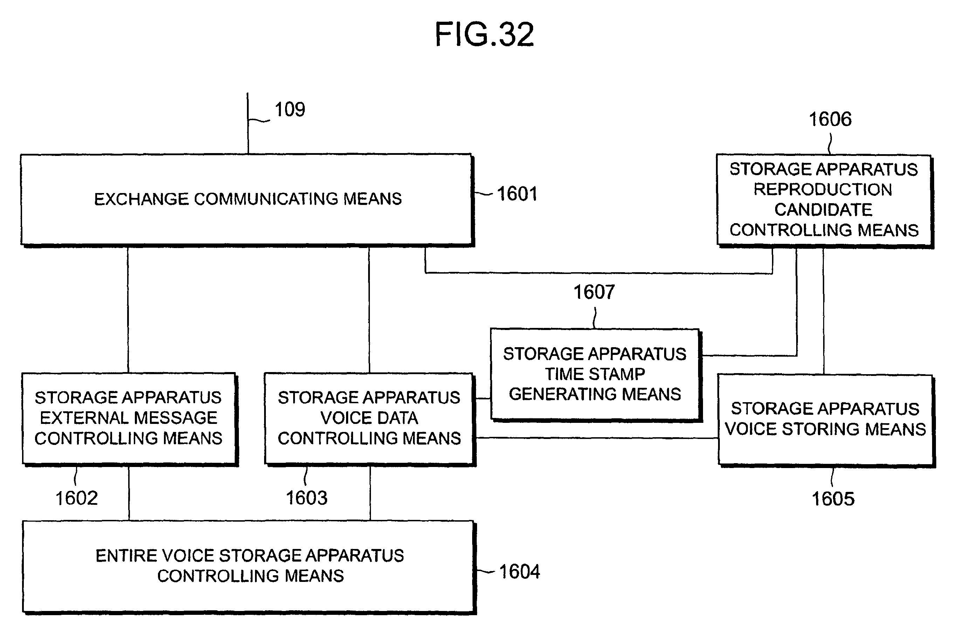

Furthermore, the voice storage apparatus 103 has the structure shown in FIG. 32. In the drawing, reference numerals 1601 to 1606 are the same as those in the third embodiment (FIG. 16). Besides these members, the voice storage apparatus 103 includes storage apparatus time stamp generating means 1607 for generating a time stamp. The storage apparatus reproduction candidate controlling means 1606 selects a reproduction candidate based on the reproduction candidate selection information shown in FIG. 22.

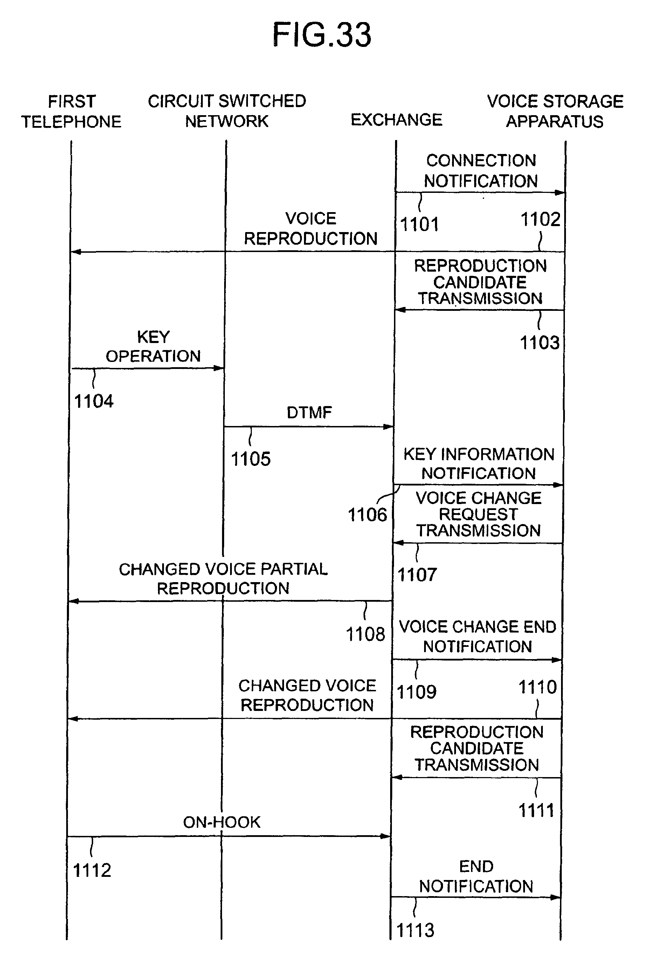

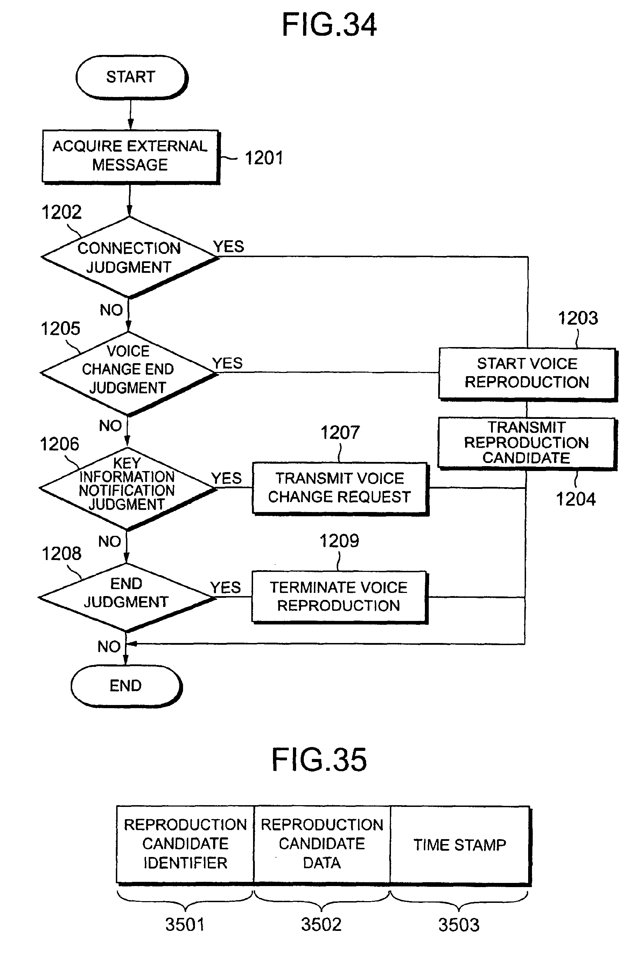

The operation of the voice storage system having the above-described structure will now be described. FIG. 33 is a sequence diagram showing the connection operation of telephones in the voice storage system. FIG. 34 shows a sequential operation flow on the voice storage apparatus.

FIG. 35 shows the data structure of the reproduction candidate selection information which is transmitted from the voice storage apparatus 103 to the exchange 102 through the reproduction candidate voice channel on the communication path 109. In FIG. 35, reference numeral 3501 denotes a reproduction candidate identifier field for identifying a part of the voice which can be a next reproduction candidate. Reference numeral 3502 designates a reproduction candidate data field for storing a part of the voice which can be a next reproduction candidate. Reference numeral 3503 represents a time stamp filed in which a time for transmitting the reproduction candidate selection information is written.

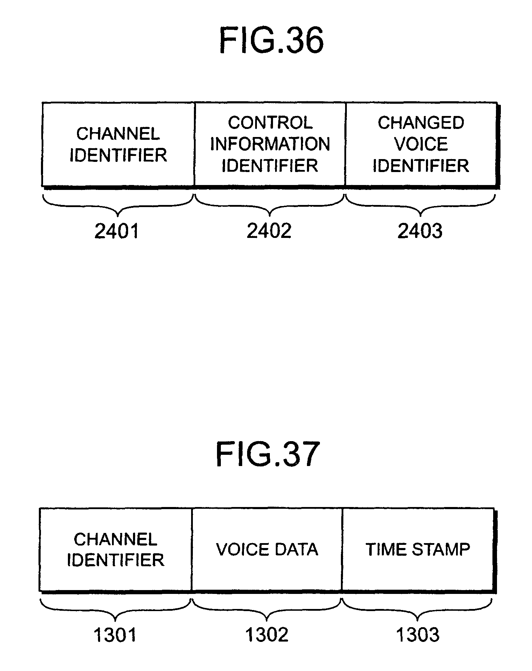

FIG. 36 shows the data structure of the external message information transmitted from the voice storage apparatus 103 to the exchange 102 through the control channel on the communication path 109. In FIG. 36, reference numeral 2401 denotes a channel identifier field for identifying a call during reproduction. Reference numeral 2402 designates a control information identifier field for storing information required for controlling the voice on the exchange 102. Reference numeral 2403 represents a changed voice identifier for identifying that voice from the reproduction candidates which have been already stored in the exchange.

FIG. 37 shows the data structure of the voice data information transmitted from the voice storage apparatus 103 to the exchange 102 through the voice channel on the communication path 109. Reference numeral 1301 denotes a channel identifier field for identifying a call during reproduction. Reference numeral 1302 designates a voice data filed for storing actual data of the reproduced voice. Reference numeral 1303 represents a time stamp filed in which a time for transmitting the voice data is written. Incidentally, since the data structure of the external message information transmitted from the exchange 102 to the voice storage apparatus 103 through the control channel on the communication path 107 has the form similar to that shown in FIG. 30, its explanation is omitted.

In FIG. 33, description will be given as to a sequential flow of the following operation. That is, voice reproduction is started by commencing connection of the first telephone 101 and, at the same time, a part of the whole voice which can be a next reproduction candidate is also transmitted. Further, the exchange 102 detects the key operation by the first telephone 101 as the DTMF, and transmits it to the voice storage apparatus 103 as the key information. Reproduction of a part of the changed voice is started concurrently with reception of a voice change request by the exchange 102. At the same time, the voice change end notification is transmitted, and the voice storage apparatus 103 transmits the changed voice to the first telephone 101 through the exchange 102, and voice reproduction is terminated by end of connection of the first telephone 101.

When connection between the first telephone 101 and the exchange 102 is started, the exchange 102 transmits the connection notification 1101 to the voice storage apparatus 103. The detail of the connection notification transmission processing is similar to that of the third embodiment.

Upon receiving the connection notification 1101, the voice storage apparatus 103 starts voice reproduction and transmits the voice reproduction 1102 and the reproduction candidate transmission 1103. Judgment on the voice reproduction start and the reproduction candidate transmission in the voice storage apparatus 103 is carried out by a flow of the voice reproduction start processing 1203 and the reproduction candidate transmission processing 1204 through the external message acquisition processing 1201 and the connection judgment 1202. The voice reproduction start processing and the reproduction candidate transmission processing will now be described in detail.

The storage apparatus external message controlling means 1602 of the voice storage apparatus 103 fetches an external message received by the exchange communicating means 1601 from the control channel on the communication path 109, analyzes it and transmits the connection notification to the entire voice storage apparatus controlling means 1604. The entire voice storage apparatus controlling means 1604 indicates the storage apparatus voice data controlling means 1603 the voice data which should be read from the storage apparatus voice storing means 1605, and the storage apparatus voice data controlling means 1603 generates the voice reproduction 1102 in the form of voice data based on the voice data read from the storage apparatus voice storing means 1605, the channel identifier analyzed by the storage apparatus external message controlling means 1602 and the time stamp indicative of a transmission time obtained from the storage apparatus time stamp generating means 1607. The exchange communicating means 1601 transmits the generated voice reproduction through the voice channel on the communication path 109.

At the same time, the storage apparatus external message controlling means 1602 generates the external message based on the analyzed channel identifier, the changed voice identifier and the control information identifier, and the exchange communicating means 1601 transmits the generated external message through the control channel on the communication path 109.

Furthermore, the storage apparatus reproduction candidate controlling means 1606 acquires a part of the whole voice which can be a next reproduction candidate as the reproduction candidate data from the storage apparatus voice storing means 1605, imparts the reproduction candidate identifier and the time stamp indicative of the transmission time obtained from the storage apparatus time stamp generating means 1607, and generates data in the form of the reproduction candidate data structure. The exchange communicating means 1601 transmits this data through the reproduction candidate voice channel on the communication path 109.

The first telephone 101 receives the reproduced voice 1102 transmitted through the exchange 102 and the circuit switched network 106. On the other hand, the exchange 102 receives the reproduction candidate transmission 1103, and stores a part of the whole voice which can be a next reproduction candidate. The detail of the reproduction candidate storage processing is similar to that of the third embodiment.

Subsequently, when the first telephone 101 presses the receiver button, the key operation 1104 is transmitted to the circuit switched network 106. Upon receiving the key operation 1104, the circuit switched network 106 converts it into the DTMF 1105 and transmits the obtained result to the exchange 102.

The exchange 102 detects the DTMF 1105, and transmits the key information notification 1106 to the voice storage apparatus 103. The detail of the key information notification transmission processing is the same as that of the third embodiment.

When the voice storage apparatus 103 receives the key information notification 1106, it analyzes the key information and transmits the voice change request 1107. Judgment on the voice change request transmission in the voice storage apparatus 103 is carried out by a flow of the voice change request transmission 1207 through the external message acquisition processing 1201 and the key information notification judgment 1206. The voice change request 1107 is transmitted by the procedure similar to that for transmitting the voice reproduction 1102.

Upon receiving the voice change request 1107, the exchange 102 performs the changed voice partial reproduction 1108 and, at the same time, transmits the voice change end notification 1109 to the voice storage apparatus. The changed voice partial reproduction 1108 will now be described in detail. The changed voice partial reproduction 1108 identifies the voice to be subsequently reproduced based on the channel identifier and the changed voice identifier obtained from the external message acquired by the exchange external message controlling means 1507.

Since a part of the voice which can be a next reproduction candidate has been already stored by the exchange voice storing means 1510 in accordance with each reproduction candidate identifier, a part of the changed voice is reproduced. It is to be noted that all parts other than the necessary part of the voice are not required and hence they are eliminated. Moreover, the voice change end notification 1109 is conducted by the procedure similar to that for transmitting the connection notification 1101.

Upon receiving the voice change end notification 1109, the voice storage apparatus 103 starts reproduction of the changed voice and transmits the changed voice reproduction 1110. In addition, the reproduction candidate transmission 1111 is also transmitted. Judgment on start of voice reproduction and transmission of the reproduction candidate in the voice storage apparatus 103 is carried out by a flow of the voice reproduction start processing 1203 and the reproduction candidate transmission processing 1204 through the external message acquisition processing 1201 and the voice change end judgment 1205. Transmission of the changed voice reproduction 1110 is effected by the procedure similar to that for transmitting the voice reproduction 1102, and transmission of the reproduction candidate transmission 1111 is carried out by the procedure similar to that of the reproduction candidate transmission 1103.

The first telephone 101 receives the changed voice partial reproduction 1108 transmitted through the exchange 102 and the circuit switched network 106. Additionally, after completion of that reproduction, the first telephone 101 receives the changed voice reproduction 1110. On the other hand, the exchange 102 receives the reproduction candidate transmission 1111 and stores a part of the whole voice which can be a next candidate. The processing for storing a part of the whole voice which can be a next reproduction candidate is executed by the procedure similar to that of the processing when receiving the reproduction candidate transmission 1103.

Subsequently, when connection is terminated and the first telephone 101 gets on the hook, the exchange 102 receives the on-hook 1112. The exchange 102 transmits the end notification 1113 to the voice storage apparatus 103. The end notification 1113 is transmitted by the procedure similar to that for transmitting the connection notification 1101. Upon receiving the end notification 1113, the voice storage apparatus 103 terminates voice reproduction. Judgment on end of voice reproduction in the voice storage apparatus 103 is carried out by a flow of the voice reproduction end processing 1209 through the external message acquisition processing 1201 and the end judgment 1208.

Description will now be given as to how to switch from the changed voice partial reproduction 1108 to the changed voice reproduction 1110. As described above, when the voice storage apparatus transmits a part of the whole voice as a reproduction candidate, it imparts a time of transmission (time stamp). On the other hand, when the voice storage apparatus carries out changed voice reproduction, although all of the changed voice is transmitted from the top thereof, the voice data to which the time stamp at the time of transmitting a part of the changed voice is imparted is transmitted as to a part where the changed voice overlaps a part of the changed voice which has been already transmitted. Moreover, in regard to the subsequent voice data, the time stamp at the time of transmission is imparted. Upon receiving the changed voice request, the exchange starts reproduction of a part of the changed voice. Although the changed voice in the reproduced voice buffer is reproduced after partial reproduction of the changed voice, reproduction of the changed voice is carried out after comparing in time stamp between a part of the changed voice and the changed voice and proceeding a pointer of the reproduced voice buffer to the voice data having the time stamp which is newer than the time stamp of the part of the changed voice. By doing so, transition from changed voice partial reproduction to changed voice reproduction can be continuously performed.

Incidentally, it can be readily analogized that switching from changed voice partial reproduction to changed voice reproduction can be also realized by a method for storing a size of the part of the changed voice, proceeding the pointer of the reproduced voice buffer by a distance corresponding the size of the part of the changed voice and reproducing the voice from that pointer.

Additionally, it can be easily analogized that switching from changed voice partial reproduction to changed voice reproduction can be also realized by a method for shifting the pointer of the changed voice by a distance corresponding to a size of the part of the changed voice when the voice storage apparatus transmits the part of the changed voice, starting transmission of the changed voice from a position of the pointer simultaneously with reception of the changed voice request and starting reproduction of the voice from the top of the voice reproduction buffer concurrently with termination of partial reproduction of the changed voice by the exchange.

As described above, in the system according to this embodiment, it is good enough that the exchange reproduces a part of the changed voice indicated by the voice storage apparatus, and the processing burden can be reduced as compared with the structure according to the third embodiment in which the exchange itself must identify the changed voice.

It is to be noted that the present invention can be likewise applied to voice reproduction by voice multiplexing using RTP (real-time transport protocol) aiming at transmission of stream type data and the similar advantage can be obtained.

### INDUSTRIAL APPLICABILITY

As apparent from the above description, in the voice storage system according to the present invention, at first, means for imparting the time stamps to the voice data and the external message is provided to the exchange, and means for establishing synchronization between the voice data and the control message by utilizing the time stamps is provided to the voice storage apparatus. Therefore, it is possible to obtain an advantage that unnecessary voice in hold/transfer processing during recording voice communication can be eliminated.

At second, since there is provided means for clearing the voice data remaining in the reproduction buffer when a reproduced voice change request is issued from the telephone during voice reproduction, it is possible to obtain an advantage that smooth voice change processing can be performed.

At third, by storing in the exchange a part of the voice which is predicted to be subsequently reproduced, it is possible to obtain an advantage that a time lag till the voice after change is stored in the reproduced voice buffer can be reduced.

## Claims

1. A voice storage system comprising:
a circuit switched network for performing communication by circuit switching;
a first telephone which is connected to said circuit switched network and performs voice communication;
an exchange which is connected to said circuit switched network and performs voice switching;
one or a plurality of private telephones which are connected to said exchange and perform voice communication; and
a voice storage apparatus which is connected to said exchange, stores voice in at least speech communication recording by voice data and an external message transmitted from said exchange, and establishes synchronization between said voice data and said external message transmitted from said exchange, thereby controlling storage of speech communication voice.

2. An exchange of a voice storage system,
said voice storage system comprising:
a circuit switched network for performing communication by circuit switching;
a first telephone which is connected to said circuit switched network and performs voice communication;
an exchange which is connected to said circuit switched network and performs voice switching;
one or a plurality of private telephones which are connected to said exchange and perform voice communication; and
a voice storage apparatus which is connected to said exchange, stores voice in at least speech communication recording by voice data and an external message transmitted from said exchange, and establishes synchronization between said voice data and said external message transmitted from said exchange, thereby controlling storage of speech communication voice,
said exchange comprising:
network communicating means for performing connection with said circuit switched network;
circuit switching means for performing circuit connection between said circuit switched networks or terminals;
terminal communicating means for performing connection between said exchange and one or a plurality of said private telephones;
entire exchange controlling means for controlling said entire exchange;
exchange time stamp generating means for generating a time stamp;
exchange voice data controlling means for acquiring said time stamp from said exchange time stamp generating means, imparting said time stamp to voice data obtained from said circuit switching means, and generating said voice data;
exchange external message controlling means for acquiring said time stamp from said exchange time stamp generating means, imparting said time stamp to an event obtained from said entire exchange controlling means, and generating an external message; and
voice storage apparatus communicating means for performing communication with said voice storage apparatus.

3. A voice storage apparatus of a voice storage system,
said voice storage system comprising:
a circuit switched network for performing communication by circuit switching;
a first telephone which is connected to said circuit switched network and performs voice communication;
an exchange which is connected to said circuit switched network and performs voice switching;
one or a plurality of private telephones which are connected to said exchange and perform voice communication; and
said voice storage apparatus which is connected to said exchange, stores voice in at least speech communication recording by voice data and an external message transmitted from said exchange, and establishes synchronization between said voice data and said external message transmitted from said exchange, thereby controlling storage of speech communication voice,
said voice storage apparatus comprising:
exchange communicating means for receiving said external message and said voice data transmitted from said exchange;
storage apparatus external message controlling means for performing control for fetching said received external message;
storage apparatus voice data controlling means for controlling said received voice data;
storage apparatus time stamp acquiring means for acquiring said time stamps from said external message and said voice data;
entire voice storage apparatus controlling means for establishing synchronization of said event by said private telephone obtained from said external message and said speech communication voice obtained from said voice data and controlling said entire voice storage apparatus; and
storage apparatus voice storing means for storing said speech communication voice.

4. The voice storage apparatus according to claim 3, wherein hold and transfer events are obtained from said external message by said storage apparatus external message controlling means, voice is obtained from said voice data by said storage apparatus voice data controlling means, said event and said speech communication voice are synchronized with each other by said entire storage apparatus controlling means based on said time stamp obtained by said storage apparatus time stamp acquiring means, and the recording operation is started, paused, restarted or terminated based on a time of a predetermined operation such as hold or transfer.

5. A voice storage system comprising:
a circuit switched network for performing communication by circuit switching;
a first telephone which is connected to said circuit switched network and performs voice communication;
an exchange which is connected to said circuit switched network and performs voice switching; and
a voice storage apparatus which is connected to said exchange, and changes reproduced voice by voice data and an external message transmitted from said exchange,
wherein reproduced voice is changed when said exchange establishes synchronization between said voice data and said external message.

6. An exchange of a voice storage system,
said voice storage system comprising:
a circuit switched network for performing communication by circuit switching;
a first telephone which is connected to said circuit switched network and performs voice communication;
an exchange which is connected to said circuit switched network and performs voice switching; and
a voice storage apparatus which is connected to said exchange, and changes reproduced voice by voice data and an external message transmitted from said exchange,
reproduced voice being changed when said exchange establishes synchronization between said voice data and said external data,
said exchange comprising:
network communicating means for performing connection with said circuit switched network;
circuit switching means for performing circuit connection between said circuit switched networks or terminals;
terminal communicating means for performing connection between said exchange and one or a plurality of private telephones;
entire exchange controlling means for controlling said entire exchange;
exchange voice data controlling means for controlling voice data obtained from said circuit switching means and said voice data transmitted from said voice storage apparatus;
exchange DTMF detection/analysis controlling means for detecting/analyzing DTMF information from said voice data obtained from said circuit switching means and converting said information into key information;
exchange external message controlling means for generating at least an external message from an event obtained from said entire exchange controlling means and said key information obtained from said exchange DTMF detection/analysis controlling means;
exchange time stamp acquiring means for acquiring time stamps from said voice data and said external message transmitted from said voice storage apparatus;
exchange voice storing means for storing reproduced voice from said voice data controlled by said entire exchange controlling means based on control information and a time stamp obtained from said external message; and
voice storage apparatus communicating means for performing communication with said voice storage apparatus.

7. A voice storage apparatus of a voice storage system,
said voice storage system comprising:
said voice storage system comprising:
a circuit switched network for performing communication by circuit switching;
a first telephone which is connected to said circuit switched network and performs voice communication;
an exchange which is connected to said circuit switched network and performs voice switching; and
said voice storage apparatus which is connected to said exchange, and changes reproduced voice by voice data and an external message transmitted from said exchange,
reproduced voice being changed when said exchange establishes synchronization between said voice data and said external data,
said voice storage apparatus comprising:
exchange communicating means for receiving said external message and said voice data transmitted from said exchange;
storage apparatus external message controlling means for generating at least an external message to be transmitted to said exchange;
storage apparatus voice data controlling means for controlling reproduced voice to be transmitted to said exchange;
storage apparatus time stamp generating means for generating said time stamp;
entire voice storage apparatus controlling means for controlling said entire voice storage apparatus; and
storage apparatus voice storing means for storing reproduced voice to be transmitted to said exchange.

8. A voice storage system comprising:
a circuit switched network for performing communication by circuit switching;
a first telephone which is connected to said circuit switched network and performs voice communication;
an exchange which is connected to said circuit switched network and performs voice switching; and
a voice storage apparatus which is connected to said exchange, and changes reproduced voice by voice data and an external message transmitted from said exchange,
wherein said exchange comprises:
a reproduced voice buffer for temporarily storing said reproduced voice to be transmitted to said circuit switched network; and
buffer clearing means for clearing unnecessary voice from said reproduced voice buffer based on a clearing request transmitted from said voice storage apparatus for changing said reproduced voice.

9. A voice storage apparatus of a voice storage system,
said voice storage system comprising:
a circuit switched network for performing communication by circuit switching;
a first telephone which is connected to said circuit switched network and performs voice communication;
an exchange which is connected to said circuit switched network and performs voice switching; and
a voice storage apparatus which is connected to said exchange, and changes reproduced voice by voice data and an external message transmitted from said exchange,
said exchange comprising:
a reproduced voice buffer for temporarily storing said reproduced voice to be transmitted to said circuit switched network; and
buffer clearing means for clearing unnecessary voice from said reproduced voice buffer based on a clearing request transmitted from said voice storage apparatus for changing said reproduced voice,
wherein said voice storage apparatus comprises:
buffer clearing means which transmits changed reproduced voice to said exchange together with said clearing request and clears from said reproduced voice buffer reproduced voice having a time stamp preceding a time stamp imparted to said clearing request.

10. A voice storage apparatus of a voice storage system,
said voice storage system comprising:
a circuit switched network for performing communication by circuit switching;
a first telephone which is connected to said circuit switched network and performs voice communication;
an exchange which is connected to said circuit switched network and performs voice switching; and
said voice storage apparatus which is connected to said exchange, and changes reproduced voice by voice data and an external message transmitted from said exchange,
said exchange comprising:
a reproduced voice buffer for temporarily storing said reproduced voice to be transmitted to said circuit switched network; and
buffer clearing means for clearing unnecessary voice from said reproduced voice buffer based on a clearing request transmitted from said voice storage apparatus for changing said reproduced voice,
wherein said voice storage apparatus comprises buffer clearing means which transmits said clearing request to said exchange and clears all of reproduced voice remaining in said reproduced voice buffer, and is configured to transmit changed reproduced voice to said exchange upon receiving a notification of termination of clearing said reproduced voice buffer.

11. An exchange of a voice storage system,
said voice storage system comprising:
a circuit switched network for performing communication by circuit switching;
a first telephone which is connected to said circuit switched network and performs voice communication;
an exchange which is connected to said circuit switched network and performs voice switching; and
a voice storage apparatus which is connected to said exchange, and changes reproduced voice by voice data and an external message transmitted from said exchange,
said exchange comprising:
a reproduced voice buffer for temporarily storing said reproduced voice to be transmitted to said circuit switched network; and
buffer clearing means for clearing unnecessary voice from said reproduced voice buffer based on a clearing request transmitted from said voice storage apparatus for changing said reproduced voice,
wherein, besides said reproduced voice buffer and said buffer clearing means, said exchange further comprises:
network communicating means for performing connection with said circuit switched network;
circuit switching means for performing circuit connection between said circuit switched networks or terminals;
terminal communicating means for performing connection between said exchange and a private telephone;
entire exchange controlling means for controlling said entire exchange;
exchange voice data controlling means for controlling voice data obtained from said circuit switching means and said voice data transmitted from said voice storage apparatus;
exchange DTMF detecting means for detecting DTMF information from said voice data obtained from said circuit switching means and converting said detected information into key information;
exchange external message controlling means for generating at least an external message from an event obtained from said entire exchange controlling means and key information obtained from said exchange DTMF detecting means; and
voice storage apparatus communicating means for performing communication with said voice storage apparatus.

12. A voice storage apparatus of a voice storage system,
said voice storage system comprising:
a circuit switched network for performing communication by circuit switching;
a first telephone which is connected to said circuit switched network and performs voice communication;
an exchange which is connected to said circuit switched network and performs voice switching; and
said voice storage apparatus which is connected to said exchange, and changes reproduced voice by voice data and an external message transmitted from said exchange,
said exchange comprising:
a reproduced voice buffer for temporarily storing said reproduced voice to be transmitted to said circuit switched network; and
buffer clearing means for clearing unnecessary voice from said reproduced voice buffer based on a clearing request transmitted from said voice storage apparatus for changing said reproduced voice,
wherein said voice storage apparatus comprises:
exchange communicating means for receiving said external message and said voice data transmitted from said exchange, and storage apparatus external message controlling means for generating at least an external message to be transmitted to said exchange;
storage apparatus voice data controlling means for controlling reproduced voice to be transmitted to said exchange;
entire voice storage apparatus controlling means for controlling said entire voice storage apparatus; and
storage apparatus voice storing means for storing reproduced voice to be transmitted to said exchange.

13. A voice storage system comprising:
a circuit switched network for performing communication by circuit switching;
a first telephone which is connected to said circuit switched network and performs voice communication;
an exchange which is connected to said circuit switched network and performs voice switching; and
a voice storage apparatus which is connected to said exchange, and changes reproduced voice by voice data and an external message transmitted from said exchange,
wherein said voice storage apparatus transmits a part of the whole voice which can be a next reproduction candidate during transmission of said voice data, and said exchange stores said part of the whole voice which can be a next reproduction candidate concurrently with voice reproduction, reproduces a part of said voice which has been already stored when changing said reproduced voice, and subsequently reproduces voice transmitted from said voice storage apparatus after changing said reproduced voice.

14. The voice storage system according to claim 13, wherein said part of the whole voice is transmitted, and said exchange stores said part of the whole voice and reproduces a part of said voice which has been already stored when changing said reproduced voice.

15. The voice storage system according to claim 14, wherein, when changing said reproduced voice, said exchange is configured to identify voice which should be reproduced from said part of said whole voice.

16. The voice storage system according to claim 14, wherein, when changing said reproduced voice, a part of voice which should be reproduced is indicated to said exchange, and said exchange is configured to reproduce said indicated part of said voice.

17. An exchange of a voice storage system,
said voice storage system comprising:
a circuit switched network for performing communication by circuit switching;
a first telephone which is connected to said circuit switched network and performs voice communication;
said exchange which is connected to said circuit switched network and performs voice switching; and
a voice storage apparatus which is connected to said exchange, and changes reproduced voice by voice data and an external message transmitted from said exchange, said voice storage apparatus being configured to transmit a part of the whole voice which can be a next reproduction candidate during transmission of said voice data, said exchange being configured to store said part of the whole voice which can be a next reproduction candidate concurrently with voice reproduction, reproduce a part of said voice which has been already stored when changing said reproduced voice and subsequently reproduce voice transmitted from said voice storage apparatus after changing said reproduced voice,
wherein said exchange comprises:
network communicating means for performing connection with said circuit switched network;
circuit switching means for performing circuit connection between said circuit switched networks or terminals;
terminal communicating means for performing connection between said exchange and one or a plurality of private telephones;
entire exchange controlling means for controlling said entire exchange;
exchange voice data controlling means for controlling voice data obtained from said circuit switching means and said voice data transmitted by said voice storage apparatus;
exchange DTMF detection/analysis controlling means for detecting/analyzing DTMF information from said voice data obtained from said circuit switching means and converting it into key information;
exchange external message controlling means for generating at least an external message from an event obtained from said entire exchange controlling means and said key information obtained by said exchange DTMF detection/analysis controlling means;
exchange reproduction candidate controlling means for controlling data of a part of the whole voice which has been transmitted from said voice storage apparatus and can be a next reproduction; and
exchange voice storing means for storing reproduced voice obtained from said voice data controlled by said entire exchange controlling means based on said external message information and simultaneously storing data of said part of the whole voice which has been transmitted from said exchange reproduction candidate controlling means and can be a next reproduction candidate.

18. A voice storage apparatus of a voice storage system,
said voice storage system comprising:
a circuit switched network for performing communication by circuit switching;
a first telephone which is connected to said circuit switched network and performs voice communication;
an exchange which is connected to said circuit switched network and performs voice switching; and
said voice storage apparatus which is connected to said exchange, and changes reproduced voice by voice data and an external message transmitted from said exchange, said voice storage apparatus being configured to transmit a part of the whole voice which can be a next reproduction candidate during transmission of said voice data, said exchange being configured to store said part of the whole voice which can be a next reproduction candidate concurrently with voice reproduction, reproduce a part of said voice which has been already stored when changing said reproduced voice and subsequently reproduce voice transmitted from said voice storage apparatus after changing said reproduced voice,
wherein said voice storage apparatus comprises:
exchange communicating means for receiving said external message and said voice data transmitted from said exchange;
storage apparatus external message controlling means for generating at least an external message to be transmitted to said exchange;
storage apparatus voice data controlling means for controlling reproduced voice to be transmitted to said exchange;
entire voice storage apparatus controlling means for controlling said entire voice storage apparatus;
storage apparatus voice storing means for storing reproduced voice to be transmitted to said exchange; and
storage apparatus reproduction candidate controlling means for using said storage apparatus voice storing means to acquire a part the whole voice which can be a next reproduction candidate based on current voice data which is being transmitted by said exchange communicating means and transmit it to said exchange.

19. The voice storage system according to claim 13, wherein said exchange is configured to reproduce voice transmitted from said voice storage apparatus following reproduction of said part of the voice which has been already stored based on a time stamp imparted to said part of said voice and a time stamp imparted to voice transmitted from said voice storage apparatus after changing reproduced voice.

20. An exchange of a voice storage system,
said voice storage system comprising:
a circuit switched network for performing communication by circuit switching;
a first telephone which is connected to said circuit switched network and performs voice communication;
said exchange which is connected to said circuit switched network and performs voice switching; and
a voice storage apparatus which is connected to said exchange, and changes reproduced voice by voice data and an external message transmitted from said exchange, said voice storage apparatus being configured to transmit a part of the whole voice which can be a next reproduction candidate during transmission of said voice data, said exchange being configured to store said part of the whole voice which can be a next reproduction candidate concurrently with voice reproduction, reproduce a part of said voice which has been already stored when changing said reproduced voice and subsequently reproduce voice transmitted from said voice storage apparatus after changing said reproduced voice, said exchange being configured to perform reproduction of voice transmitted from said voice storage apparatus following reproduction of said part of the voice which has been already stored based on a time stamp imparted to said part of the voice and a time stamp imparted to said voice transmitted from said voice storage apparatus after changing said reproduced voice,
wherein said exchange comprises:
network communicating means for performing connection with said circuit switched network;
circuit switching means for performing circuit connection between said circuit switched network or terminals;
terminal communicating means for performing connection between said exchange and a private telephone;
entire exchange controlling means for controlling said entire exchange;
exchange voice data controlling means for controlling voice data obtained from said circuit switching means and said voice data transmitted by said voice storage apparatus;
exchange DTMF detecting means for detecting DTMF information from said voice data obtained from said circuit switching means and converting it into key information;
exchange external message controlling means for generating at least an external message from an event obtained from said entire exchange controlling means and said key information obtained by said exchange DTMF detecting means;
exchange reproduction candidate controlling means for controlling a part of the whole voice which has been transmitted from said voice storage apparatus and can be a next reproduction candidate;
exchange voice storing means for storing said voice data and simultaneously storing said part of the whole voice which has been transmitted from said exchange reproduction candidate controlling means and can be a next reproduction candidate;
exchange time stamp acquiring means for acquiring time stamps from said voice data and a part of changed voice; and
exchange reproduction candidate reproducing means for reproducing said part of said changed voice.

21. A voice storage apparatus of a voice storage system,
said voice storage system comprising:
a circuit switched network for performing communication by circuit switching;
a first telephone which is connected to said circuit switched network and performs voice communication;
an exchange which is connected to said circuit switched network and performs voice switching; and
said voice storage apparatus which is connected to said exchange, and changes reproduced voice by voice data and an external message transmitted from said exchange, said voice storage apparatus being configured to transmit a part of the whole voice which can be a next reproduction candidate during transmission of said voice data, said exchange being configured to store said part of the whole voice which can be a next reproduction candidate concurrently with voice reproduction, reproduce a part of said voice which has been already stored when changing said reproduced voice and subsequently reproduce voice transmitted from said voice storage apparatus after changing said reproduced voice, said exchange being configured to perform reproduction of voice transmitted from said voice storage apparatus following reproduction of said part of the voice which has been already stored based on a time stamp imparted to said part of the voice and a time stamp imparted to said voice transmitted from said voice storage apparatus after changing said reproduced voice,
wherein said voice storage apparatus comprises:
exchange communicating means for receiving said external message and said voice data transmitted from said exchange;
storage apparatus external message controlling means for generating at least an external message to be transmitted to said exchange;
storage apparatus voice data controlling means for controlling reproduced voice to be transmitted to said exchange;
storage apparatus time stamp generating means for generating said time stamp;
entire voice storage apparatus controlling means for controlling said entire voice storage apparatus;
storage apparatus voice storing means for storing reproduced voice to be transmitted to said exchange; and
storage apparatus reproduction candidate controlling means for using said storage apparatus voice storing means to acquire a part of the whole voice which can be a next transmission candidate based on current voice data which is being transmitted by said exchange communicating means and transmitting it to said exchange.
